(19) Europäisches Patentamt
European Patent Office
Office européen des brevets

(11) **EP 4 600 719 A1**

(12) **EUROPEAN PATENT APPLICATION**

(43) Date of publication:
**13.08.2025 Bulletin 2025/33**

(21) Application number: **24156781.7**

(22) Date of filing: **09.02.2024**

(51) International Patent Classification (IPC):
***G02C 7/02*** *(2006.01)*

(52) Cooperative Patent Classification (CPC):
**G02C 7/028**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Carl Zeiss Vision International GmbH 73430 Aalen (DE)**

(72) Inventors:
• **Latzel, Sabine**
  **73430 Aalen (DE)**
• **Welscher, Markus**
  **73430 Aalen (DE)**

(74) Representative: **Carl Zeiss AG - Patentabteilung Carl-Zeiss-Straße 22 73447 Oberkochen (DE)**

(54) **METHOD BEING CONFIGURED FOR CALCULATING BY A COMPUTER A COMPENSATED DIGITAL TWIN OF A SPECTACLE LENS**

(57)    The invention discloses a method being configured for calculating by a computer a compensated digital twin of a spectacle lens for the purpose of a use of the compensated digital twin for a manufacture of the spectacle lens, said compensated digital twin being based on a predefined digital twin of a spectacle lens, the method is characterized in the step of:
- combining a compensated surface of a predefined digital twin of a spectacle lens with a respective other surface of said predefined digital twin resulting in said compensated digital twin.

EP 4 600 719 A1

**Description**

The present invention relates to a method configured for calculating by a computer a compensated digital twin of a spectacle lens for the purpose of a use of the compensated digital twin for a manufacture of the spectacle lens according to the preamble of claim 1.

<u>Related prior art</u>

WO 2016/202480 A1 discloses a method implemented by computer means comprises a modifying step during which a first surface and a second surface of an optical system are modified to obtain a modified optical system such that the dioptric function of the modified optical system is substantially the same as the dioptric function of the optical system.

<u>Problem to be solved</u>

Departing from the method described in WO 2016/202480 A1, page 17, lines 15 to 19, with respect to figure 10, as comprising an optical system data providing step S1, a modifying surface providing step S2, a complementary modifying surface determining step S3, and an adding step S5, the problem to be solved is to provide a concrete modifying step during which a surface of a calculated optical system is modified such that the dioptric function of a manufactured modified optical system is substantially the same as the dioptric function of the calculated optical system.

<u>Summary of the invention</u>

The problem has been solved by the method according to claim 1.

Preferred embodiments which might be realized in an isolated fashion or in any arbitrary combination, are given in the dependent claims.

The method being configured for calculating by a computer a compensated digital twin of a spectacle lens for the purpose of a use of the compensated digital twin for a manufacture of the spectacle lens, said compensated digital twin being based on a predefined digital twin of a spectacle lens, the method is characterized in the step of:

- combining a compensated surface of said predefined digital twin of said spectacle lens with a respective other surface of said predefined digital twin resulting in said compensated digital twin, said compensated surface of said predefined digital twin resulting from

    (i) an addition of each discrete z position of a correction surface of a set of n digital twins of a spectacle lens, $n \geq 1$, in each predefined discrete x,y position to a respective discrete z position of a respective surface of said predefined digital twin in a respective discrete x,y position, or
    (ii) an addition of a mathematical description of a correction surface of a set of n digital twins of a spectacle lens, $n \geq 1$, to a mathematical description of a respective surface of said predefined digital twin,

said correction surface of said set of n digital twins being determined by

    a) an optimization towards a set of n surface targets using a set of n optical power error differences as the set of n surface targets for optimization, or
    b1) a subtraction of each discrete z position of an optimized surface of an intermediate digital twin of a spectacle lens in each predefined discrete x,y position from a respective discrete z position of a respective surface of said predefined digital twin in a respective discrete x,y position, said optimized surface of said intermediate digital twin being calculated by using b1a) a set of n optical powers of said set of n digital twins in each predefined discrete x,y,z position or b1b) a set of n optical power errors of said set of n digital twins in each predefined discrete x,y,z position, each as a set of n optical targets for optimization of said intermediate digital twin, said intermediate digital twin having one surface identical to a respective surface of said predefined digital twin, or
    b2) a subtraction of a mathematical description of an optimized surface of an intermediate digital twin of a spectacle lens from a mathematical description of a respective surface of said predefined digital twin, said optimized surface of said intermediate digital twin being calculated by using b2a) a set of n optical powers of said set of n digital twins in each predefined discrete x,y,z position or b2b) a set of n optical power errors of said set of n digital twins in each predefined discrete x,y,z position each as a set of n optical targets for optimization of said intermediate digital twin, said intermediate digital twin having one surface identical to a respective surface of said predefined digital twin,

for each digital twin of said set of n digital twins, said optical power error difference being, in each predefined discrete x,y,z position, a difference between an optical power error of a respective digital twin and an optical power error of said predefined digital twin,

for each digital twin of said set of n digital twins, said optical power error of a respective digital twin being a deviation of an optical power of a respective digital twin from an ordered power in each predefined discrete x,y,z position of said predefined digital twin,

said optical power error of said predefined digital twin being a deviation of an optical power of said predefined digital twin from said ordered power in each predefined discrete x,y,z position of said predefined digital twin,

for each digital twin of said set of n digital twins, said optical power of a respective digital twin comprising, with respect to a predefined eye model, a predefined as-worn position and a predefined object-distance model, in each predefined discrete x,y,z position, an optical mean power, an optical astigmatism and an axis of said optical astigmatism,

said optical mean power being defined as an average between an optical minimum power and an optical maximum power in each predefined discrete x,y,z position,

said optical maximum power being defined as a reciprocal of a distance along a respective chief ray from a vertex surface to a point of minimum focal length in a plane T of minimum focal length, said chief ray passing through a respective predefined discrete x,y,z position, said respective predefined discrete x,y,z position determining a viewing direction of an eye of said predefined eye model,

said vertex surface being defined as a set of x,y,z positions, determined by surface points of an apex surface representing locations of an apex of a cornea when an eye rotates, and a fixed distance which is added to the apex surface at respective surface points in a direction that corresponds to the viewing direction of the eye when the apex of the cornea is located at a respective surface point, where the fixed distance is a vertex distance defined analogously as in ISO 13666:2019(E), entry 3.2.40,

said optical minimum power being defined as a reciprocal of a distance along said respective chief ray from said vertex surface to a maximum focal point in a plane S of maximum focal length,

said plane S of maximum focal length being perpendicular to said plane T of minimum focal length, said optical astigmatism being defined as a difference between said optical maximum power and said optical minimum power of a respective digital twin in each predefined discrete x,y,z position,

and said axis of said optical astigmatism being defined in a plane comprising said point of minimum focal length, said plane being perpendicular to said respective chief ray, said axis being defined as an angle between an intersection line of an x,z plane with said plane and an intersection line of said plane T of minimum focal length with said plane,

said optical power of said predefined digital twin comprising, with respect to said predefined eye model, said predefined as-worn position and said predefined object-distance model, in each predefined discrete x,y,z position, an optical mean power, an optical astigmatism and an axis of said optical astigmatism,

said ordered power of said predefined digital twin comprising at least an ordered spherical power,

for each digital twin of said set of n digital twins, said ordered power of each digital twin comprising at least said ordered spherical power.

A "compensated digital twin of a spectacle lens" is a mathematical description of a front surface for said spectacle lens, a mathematical description of a back surface for said spectacle lens, and a mathematical description of a refractive index distribution of an optical material for said spectacle lens. The mathematical description of either the front surface or the back surface of the compensated digital twin of the spectacle lens is the same mathematical description as in a predefined digital twin of a spectacle lens, the same mathematical description being for a respective surface for said spectacle lens. The compensated digital twin of the spectacle lens is for the purpose of a use for a manufacture of the spectacle lens. The mathematical descriptions include an orientation of the front surface to the back surface. Therefore, preferably, either the front surface and the back surface are described in a same coordinate system or a transformation between a coordinate system of the front surface to a coordinate system of the back surface, or vice versa, is known. The mathematical descriptions preferably are closed mathematical descriptions. The compensated digital twin of the spectacle lens is having one surface, i.e., either the front surface or the back surface, identical to a respective surface of said predefined digital twin of said spectacle lens. The compensated digital twin of the spectacle lens is having a respective other surface, i.e., either the back surface or the front surface, that has been modified to result in a compensated surface. In other words, said respective other surface of said compensated digital twin of the spectacle lens is a surface that is not identical to either the front surface or the back surface of the predefined digital twin of the spectacle lens. Said modification of said respective other surface is done by

(i) an addition of each discrete z position of a correction surface of a set of n digital twins of a spectacle lens, n ≥ 1, in each predefined discrete x,y position to a respective z position of a respective surface of said predefined digital twin of said spectacle lens in a respective discrete x,y position, or

(ii) an addition of a mathematical description of a correction surface of a set of n digital twins of a spectacle lens, n ≥ 1, to a mathematical description of a respective surface of said predefined digital twin of said spectacle lens.

Said correction surface of said set of n digital twins is determined by

a) an optimization towards a set of n surface targets, n ≥ 1, using a set of n optical power error differences as the set of n surface targets for optimization, or

b1) a subtraction of each discrete z position of an optimized surface of an intermediate digital twin of a spectacle lens in each predefined discrete x,y position from a respective discrete z position of a respective surface of said predefined digital twin in a respective discrete x,y position, said optimized surface of said intermediate digital twin being calculated by using b1a) a set of n optical powers of said set of n digital twins in each predefined discrete x,y,z position or b1b) a set of n optical power errors of said set of n digital twins in each predefined discrete x,y,z position each as a set of n optical targets for optimization of said intermediate digital twin, said intermediate digital twin having one surface identical to a respective surface of said predefined digital twin, or

b2) a subtraction of a mathematical description of an optimized surface of an intermediate digital twin of a spectacle lens from a mathematical description of a respective surface of said predefined digital twin, said optimized surface of said intermediate digital twin being calculated by using b2a) a set of n optical powers of said set of n digital twins in each predefined discrete x,y,z position or b2a) a set of n optical power errors of said set of n digital twins in each predefined discrete x,y,z position each as a set of n optical targets for optimization of said intermediate digital twin, said intermediate digital twin having one surface identical to a respective surface of said predefined digital twin.

A "predefined digital twin of a spectacle lens" is a mathematical description of a front surface for said spectacle lens, a mathematical description of a back surface for said spectacle lens, and a mathematical description of a refractive index distribution of an optical material for said spectacle lens. The predefined digital twin of the spectacle lens is for the purpose of a use for a manufacture of the spectacle lens. The mathematical descriptions include an orientation of the front surface to the back surface. Therefore, preferably, either the front surface and the back surface are described in a same coordinate system or a transformation between a coordinate system of the front surface to a coordinate system of the back surface, or vice versa, is known. The mathematical descriptions preferably are closed mathematical descriptions. The mathematical description of at least one of the front surface and the back surface preferably result from an optimization towards an optical target for said spectacle lens. Further preferably, the mathematical description of one of the surfaces, i.e., either the front surface or the back surface, is preset, while the mathematical description of a respective other surface, i.e., either the back surface or the front surface, result from an optimization towards an optical target for said spectacle lens.

In a "set of n digital twins of a spectacle lens", n ≥ 1, for n = 1, the set of n digital twins of the spectacle lens is one digital twin of a spectacle lens. For n > 1, the set of n digital twins of the spectacle lens comprises more than one digital twin of a spectacle lens, preferably in a range selected from one of the following ranges: a range of 2 to 1000 digital twins, a range of 3 to 500 digital twins, a range of 4 to 300 digital twins, a range of 5 to 200 digital twins, for example 2, 5, 10, 20, 50, 100, 400, 1000 digital twins of the spectacle lens. The set of n digital twins of the spectacle lens is for the purpose of a use for a manufacture of the spectacle lens. In the set of n digital twins each digital twin is based on an identical predefined digital twin of the spectacle lens. Said predefined digital twin of the spectacle lens is transferred to physical reality n times, i.e., by manufacturing n spectacle lenses. From each of these n spectacle lenses a respective digital twin of the spectacle lens is created resulting in the set of n digital twins of the spectacle lens. For creating said respective digital twin of the spectacle lens, each of a front surface and a back surface of a respective spectacle lens is measured resulting in a point cloud representing the front surface and in a point cloud representing the back surface. From said point cloud representing the front surface a mathematical description of the front surface is created by a mathematical fit, from said point cloud representing the back surface a mathematical description of the back surface is created by a mathematical fit. A combination of both mathematical descriptions is the digital twin of the spectacle lens. Preferably both mathematical descriptions are either described in a same coordinate system or a transformation between a coordinate system of the mathematical description the front surface to a coordinate system of the mathematical description to a back surface, or vice versa, is known.

A "digital twin of a spectacle lens" is a mathematical description of a front surface of said spectacle lens, a mathematical description of a back surface of said spectacle lens, and a mathematical description of a refractive index distribution of an optical material of said spectacle lens. The digital twin of the spectacle lens is for the purpose of a use for a manufacture of the spectacle lens. The mathematical descriptions include an orientation of the front surface to the back surface. Therefore, preferably, either the front surface and the back surface are described in a same coordinate system or a transformation between a coordinate system of the front surface to a coordinate system of the back surface, or vice versa, is known. The mathematical descriptions preferably are closed mathematical descriptions. The mathematical description of the front surface preferably results from a mathematical fit to a point cloud defining discrete x,y,z positions of said front surface. Accordingly, the mathematical description of the back surface preferably results from a mathematical fit to a point cloud defining discrete x,y,z positions of said back surface. The point clouds preferably result from a measurement of a front surface and a back surface of a spectacle lens. The measurement may be a contact measurement, for example a tactile measurement, or a non-contact measurement, for example an optical measurement, of the front surface and the back surface of the spectacle lens.

An "intermediate digital twin of a spectacle lens" is a mathematical description of a front surface for said spectacle lens, a mathematical description of a back surface for said spectacle lens, and a mathematical description of a refractive index distribution of an optical material for said spectacle lens, whereby the mathematical description of either the front surface or the back surface is the same mathematical description as in the predefined digital twin of the spectacle lens, the same mathematical description being for a respective surface for said spectacle lens. The intermediate digital twin of the spectacle lens is for the purpose of a use for a manufacture of the spectacle lens.

The mathematical descriptions include an orientation of the front surface to the back surface. Therefore, preferably, either the front surface and the back surface are described in a same coordinate system or a transformation between a coordinate system of the front surface to a coordinate system of the back surface, or vice versa, is known. The mathematical descriptions preferably are closed mathematical descriptions. The mathematical description of either the front surface or the back surface not being the same mathematical description of the respective surface of the predefined digital twin, the mathematical description of the respective surface being for said spectacle lens, preferably results from an optimization towards a set of n optical targets where each optical target of the set of n optical targets is, for each digital twin of said set of n digital twins, either an optical power of each digital twin of said spectacle lens in each predefined discrete x,y,z position or an optical power error of each digital twin of said spectacle lens in each predefined discrete x,y,z position. The intermediate digital twin of the spectacle lens is having one surface, i.e., either the front surface or the back surface, identical to a respective surface of the predefined digital twin. The intermediate digital twin is having a respective other surface, i.e., either the back surface or the front surface, that preferably results from an optimization towards a set of n optical targets where each optical target of the set of n optical targets is, for each digital twin of said set of n digital twins either an optical power of each digital twin of said spectacle lens in each predefined discrete x,y,z position or an optical power error of each digital twin of said spectacle lens. in each predefined discrete x,y,z position In other words, the respective other surface of the intermediate digital twin of the spectacle lens is not identical to either the front surface or the back surface of the predefined digital twin of the spectacle lens.

The number "n" of the set of n optical targets or of the set of n surface target is equal to the number n of the set of n digital twins. Once the number n is selected for the predefined digital twin of the spectacle lens preferably the number n is equal in all steps of the method, preferably irrespective of the context in which the number n is used. "Each digital twin" or "each digital twin of the spectacle lens" each is hereinafter referring to each digital twin of the set of n digital twins of the spectacle lens.

The compensated digital twin of the spectacle lens, the predefined digital twin of the spectacle lens, the digital twin of the spectacle lens, each digital twin of the spectacle lens of the set of n digital twins of the spectacle lens, and the intermediate digital twin of the spectacle lens each is for the purpose of a use of the respective digital twin for a manufacture of the spectacle lens. Thereby, the predefined digital twin, the digital twin, each digital twin of the set of n digital twins, and the intermediate digital twin each represent intermediate stages in calculating the compensated digital twin of the spectacle lens for the purpose of a use of the compensated digital twin for a manufacture of the spectacle lens.

Additionally or alternatively to the respective definition given before, each of the compensated digital twin of the spectacle lens, the predefined digital twin of the spectacle lens, the intermediate digital twin of the spectacle lens, the digital twin of the spectacle lens, and each digital twin of the spectacle lens of the set of n digital twins of the spectacle lens, each being for the purpose of a use for a manufacture of the spectacle lens, may be defined analogously as in ISO 13666:2019(E), entry 3.5.2 (spectacle lens), as digital twin of an ophthalmic lens (3.5.1) virtually positioned relative to an eye model, for example a predefined eye model, or worn, after having been transferred to physical reality, by manufacturing the spectacle lens, in front of, but not in contact with, an eyeball.

Preferably, each of the compensated digital twin of the spectacle lens, the predefined digital twin of the spectacle lens, the digital twin of the spectacle lens, each digital twin of the spectacle lens of the set of n digital twins of the spectacle lens, and the intermediate digital twin of the spectacle lens are computer-readable data or in the form of computer-readable data. Said computer-readable data are configured for the purpose of a use for a manufacture of the spectacle lens. Said computer-readable data may additionally contain manufacturing instructions for manufacturing the spectacle lens. Said manufacturing instructions may be computer-readable instructions for controlling one or more manufacturing machine(s) to manufacture the spectacle lens. Said computer-readable data may (i) be stored on a computer-readable storage medium, (ii) embodied in or in the form of a data signal or (iii) transferred via a data signal. The computer-readable storage medium may be a non-transitory tangible computer-readable storage medium.

"Any digital twin of a spectacle lens" comprises the compensated digital twin of the spectacle lens, the predefined digital twin of the spectacle lens, the digital twin of the spectacle lens, each digital twin of the spectacle lens of the set of n digital twins of the spectacle lens, and the intermediate digital twin of the spectacle lens.

A "spectacle lens" is defined as in ISO 13666:2019(E), entry 3.5.2, as ophthalmic lens (3.5.1) worn in front of, but not in contact with, an eyeball. The spectacle lens results from a transfer of the compensated digital twin of the spectacle lens to physical reality, by manufacturing the spectacle lens. A spectacle lens also results from a transfer of the predefined digital twin of the spectacle lens to physical reality, by manufacturing the spectacle lens. The spectacle lens preferably is a finished spectacle lens, the finished spectacle lens as defined in ISO 13666:2019(E), entry 3.8.7 (finished lens), as spectacle lens (3.5.2) of which both sides have their final optical surface. The finished spectacle lens may be either an uncut spectacle lens as defined in ISO 13666:2019(E), entry 3.8.8 (uncut lens), or an edged spectacle lens as defined in ISO 13666:2019(E), entry 3.8.9 (edged lens). The spectacle lens preferably is selected from at least one of

- a single-vision spectacle lens as defined in ISO 13666:2019(E), entry 3.7.1 (single-vision lens),
- a position-specific single-vision spectacle lens as defined in ISO 13666:2019(E), entry 3.7.2 (position-specific single-vision lens),
- a power-variation spectacle lens as defined in ISO 13666:2019(E), entry 3.7.7 (power-variation lens),
- a progressive-power spectacle lens as defined in ISO 13666:2019(E), entry 3.7.8 (progressive-power lens).

A "surface" is a lens surface of any one of the compensated digital twin of the spectacle lens, the predefined digital twin of the spectacle lens, the digital twin of the spectacle lens, each digital twin, the intermediate digital twin, or the spectacle lens. The surface may be either a front surface or a back surface of the respective digital twin or the spectacle lens.

A "front surface of the compensated digital twin of the spectacle lens", a "front surface of the predefined digital twin of the spectacle lens", a "front surface of the digital twin of the spectacle lens", a respective "front surface of each digital twin of the spectacle lens", a "front surface of the intermediate digital twin of the spectacle lens", each is defined analogously as in ISO 13666:2019(E), entry 3.2.13, as surface of the respective digital twin of the spectacle lens intended to be virtually positioned furthest to an eye model, for example a predefined eye model.

A "front surface of the spectacle lens" is as defined in ISO 13666:2019(E), entry 3.2.13, a surface of the spectacle lens (3.5.2) intended to be fitted away from an eye.

A "back surface of the compensated digital twin of the spectacle lens", a "back surface of the predefined digital twin of the spectacle lens", a "back surface of the digital twin of the spectacle lens", a respective "back surface of each digital twin of the spectacle lens", a "back surface of the intermediate digital twin of the spectacle lens", each is defined analogously as in ISO 13666:2019(E), entry 3.2.14, as surface of the respective digital twin of the spectacle lens (3.5.2) intended to be virtually positioned nearest to an eye model, for example a predefined eye model.

A "back surface of the spectacle lens" is as defined in ISO 13666:2019(E), entry 3.2.14, a surface of the spectacle lens (3.5.2) intended to be fitted nearer to an eye.

At least one of the front surface and the back surface of each of the compensated digital twin of the spectacle lens, the predefined digital twin of the spectacle lens, the digital twin of the spectacle lens, each digital twin of the spectacle lens, the intermediate digital twin of the spectacle lens, and the spectacle lens may be a surface selected from the group consisting of:

- a spherical surface as defined in ISO 13666:2019(E), entry 3.4.1,
- a cylindrical surface as defined in ISO 13666:2019(E), entry 3.4.2,
- an aspherical surface as defined in ISO 13666:2019(E), entry 3.4.3,
- a toroidal surface as defined in ISO 13666:2019(E), entry 3.4.6,
- an atoroidal surface as defined in ISO 13666:2019(E), entry 3.4.7,
- a power-variation surface as defined in ISO 13666:2019(E), entry 3.4.10.

A "mathematical description of the front surface", a "mathematical description of the back surface" each is a mathematical formula describing a respective surface height z as a function of coordinates x and y. In other words, the respective mathematical description determines a z position of the respective surface in each x,y position. The mathematical description of the front surface, the mathematical description of the back surface each can be discretised by using a pattern of discrete x,y positions. Said pattern comprising discrete x,y positions may be adapted or selected arbitrarily. The discretisation of the front surface comprises a function value of the mathematical description of the front surface in each of the respective predefined discrete x,y positions. Accordingly, the discretisation of the back surface comprises a function value of the mathematical description of the back surface in each of the respective predefined discrete x,y positions.

A "mathematical description of a refractive index distribution" is a mathematical formula describing a refractive index of an optical material as a function of coordinates x,y,z. In other words, the mathematical description determines the refractive index in each x,y,z position. The mathematical description of the refractive index distribution can be discretised by using a pattern of discrete x,y,z positions. Said pattern comprising discrete x,y,z positions may be adapted or selected arbitrarily. The discretisation comprises a function value of the mathematical description of the refractive index distribution in each of the predefined discrete x,y,z positions.

An "x,y,z position", an "x,y position" a "predefined discrete x,y,z position", a "predefined discrete x,y position", a "discrete z position", each is defined in an x,y,z coordinate system which is defined as follows: A predefined point of each of the compensated digital twin of the spectacle lens, the predefined digital twin of the spectacle lens, the digital twin of the spectacle lens, each digital twin of the spectacle lens, the intermediate digital twin of the spectacle lens or a predefined point of the spectacle lens each defines an origin of an x,y,z coordinate system and i) a surface normal or ii) a primary direction at said predefined point defines a "z direction". An "x,y direction" is in a plane perpendicular to said surface normal or said primary direction. In said plane perpendicular to said surface normal or said primary direction an x direction and a y direction are perpendicular to each other. Said predefined point preferably is selected from the group consisting of a fitting point and an optical centre. The primary direction of the respective digital twin of the spectacle lens is defined analogously as in ISO 13666:2019(E), entry 3.2.25, as direction of a virtually represented line of sight (3.2.24), usually taken to be a horizontal, to an object at an infinite distance when assumed looking straight ahead in unaided vision. The primary direction of the spectacle lens is defined as in ISO 13666:2019(E), entry 3.2.25, as direction of a line of sight (3.2.24), usually taken to be a horizontal, to an object at an infinite distance measured with habitual head and body posture when looking straight ahead in unaided vision. The fitting point of the respective digital twin of the spectacle lens is defined analogously as in ISO 13666:2019(E), entry 3.2.34, a point on the front surface (3.2.13) of the respective digital twin of the spectacle lens stipulated for virtual positioning the respective digital twin relative to an eye model, for example a predefined eye model. The fitting point of the spectacle lens is as defined in ISO 13666:2019(E), entry 3.2.34, a point on the front surface (3.2.13) of the spectacle lens (3.5.2) stipulated by a manufacturer for positioning the spectacle lens in front of an eye. The optical centre of the respective digital twin of the spectacle lens is defined analogously as in ISO 13666:2019(E), entry 3.2.15, an intersection of an optical axis (3.1.8) with the front surface (3.2.13) of the respective digital twin of the spectacle lens. The optical centre of the spectacle lens is defined as in ISO 13666:2019(E), entry 3.2.15, an intersection of an optical axis (3.1.8) with the front surface (3.2.13) of the spectacle lens. The optical axis as defined in ISO 13666:2019(E), entry 3.1.8, is a straight line joining centres of curvature of both surfaces of a spectacle lens (3.5.2). According and analogously to note 1 to entry 3.2.30 (centration point) of ISO 13666:2019(E), the optical centre (3.2.15) usually applies to a single vision spectacle lens (3.7.1) and a digital twin of the single vision spectacle lens. Further, according and analogously to note 1 to entry 3.2.30 (centration point) of ISO 13666:2019(E), the fitting point (3.2.24) usually applies to a) a position-specific single-vision spectacle lens (3.7.2) and a digital twin of the position-specific single-vision spectacle lens or b) a power-variation spectacle lens (3.7.7) and a digital twin of the power-variation spectacle lens.

Alternatively, a surface normal at either an apex of the front surface or an apex of the back surface each of the respective digital twin of the spectacle lens or the spectacle lens shall define an origin of an x,y,z coordinate system and a z direction. An x,y direction shall be in a tangential plane to either said front surface at the apex or said back surface at the apex. An x direction and a y direction shall be perpendicular to each other in said tangential plane. The fitting point of the respective digital twin of the spectacle lens or of the spectacle lens is for example the origin of an x,y,z coordinate system in case the front surface or the back surface of the respective digital twin of the spectacle lens or of the spectacle lens is a power-variation surface or another surface without an unambiguously definably apex.

A "refractive index distribution of the compensated digital twin of the spectacle lens", a "refractive index distribution of the predefined digital twin of the spectacle lens", a "refractive index distribution of the digital twin of the spectacle lens", a respective "refractive index distribution of each digital twin of the spectacle lens", a "refractive index distribution of the intermediate digital twin of the spectacle lens", each include a refractive index of an optical material of the respective digital twin (i) being constant, i.e., being identical in each x,y,z position of the respective digital twin, or (ii) varying dependent on an x,y,z position of the respective digital twin. The respective refractive index distribution preferably is given with respect to a reference wavelength as defined in ISO 7944:1998(E), entry 2 (reference wavelength, principal dispersions and Abbe numbers), said reference wavelength being either a mercury e-line 546,07 nm as defined in ISO 7944:1998(E), entry 2.2, as an associated principal refractive index $n_e$ being a refractive index at a green mercury e-line; or said reference wavelength being a helium d-line 587,56 nm as defined in ISO 7944:1998(E), entry 2.3, as an associated principal refractive index $n_d$ being a refractive index at a yellow helium d-line, preferably a mercury e-line 546,07 nm as defined in ISO 7944:1998(E), entry 2.2. The respective refractive index distribution may be measured, for example by means of transferring the predefined digital twin of the spectacle lens to physical reality, by manufacturing a spectacle lens based on said predefined digital twin or be preset. Preferably, the respective refractive index distribution is preset.

A "refractive index distribution of the spectacle lens" includes a refractive index of an optical material of the spectacle lens i) being constant, i.e., being identical in each x,y,z position of the spectacle lens, or (ii) varying dependent on an x,y,z position of the spectacle lens. The respective refractive index distribution preferably is given with respect to a reference wavelength as defined in ISO 7944:1998(E), entry 2 (reference wavelength, principal dispersions and Abbe numbers). The respective refractive index distribution of the spectacle lens preferably is assumed to be the refractive index distribution preset for a respective digital twin of the spectacle lens, in particular preset for the compensated digital twin of the spectacle lens or the predefined digital twin. Any deviations occurring during a manufacturing of the spectacle lens are preferably neglected.

An "optical material of the compensated digital twin of the spectacle lens", an "optical material of the predefined digital twin of the spectacle lens", an "optical material of the digital twin of the spectacle lens", a respective "optical material of each digital twin of the spectacle lens", an "optical material of the intermediate digital twin of the spectacle lens", each is defined as a material having the refractive index distribution of the respective digital twin.

An "optical material of the spectacle lens" is defined as in ISO 13666:2019(E), entry 3.3.1, as transparent material capable of being manufactured into optical components.

An "ordered power" is defined analogously as in ISO 13666:2019(E), entry 3.10.14, as a power that is specified in an order to a manufacturer. The ordered power comprises at least an ordered spherical power. If applicable, the ordered power comprises an ordered spherical power, an ordered cylindrical power, and an ordered cylinder axis. The ordered power preferably is described in plus cylinder form. If necessary, the ordered power is therefore transposed from minus cylinder form to plus cylinder form.

An "ordered power of the digital twin of the spectacle lens", a respective "ordered power of each digital twin of the spectacle lens", an "ordered power of the predefined digital twin of the spectacle lens", an "ordered power of the intermediate digital twin of the spectacle lens" each is defined analogously as in ISO 13666:2019(E), entry 3.10.14, as a power that is specified in an order to a manufacturer. The ordered power of the digital twin of the spectacle lens, the respective ordered power of each digital twin of the spectacle lens, the ordered power of the predefined digital twin of the spectacle lens, the ordered power of the intermediate digital twin of the spectacle lens and of any digital twin of the spectacle lens each comprises at least an ordered spherical power. If applicable, the ordered power of the digital twin of the spectacle lens, the respective ordered power of each digital twin of the spectacle lens, the ordered power of the predefined digital twin of the spectacle lens, the ordered power of the intermediate digital twin of the spectacle lens and of any digital twin of the spectacle lens each comprises an ordered spherical power, an ordered cylindrical power, and an ordered cylinder axis. The ordered power of the digital twin of the spectacle lens, the respective ordered power of each digital twin of the spectacle lens, the ordered power of the predefined digital twin of the spectacle lens, the ordered power of the intermediate digital twin of the spectacle lens and of any digital twin of the spectacle lens preferably is described in plus cylinder form. If necessary, the ordered power of the digital twin of the spectacle lens, the respective ordered power of each digital twin of the spectacle lens, the ordered power of the predefined digital twin of the spectacle lens is therefore transposed from minus cylinder form to plus cylinder form.

The ordered power of the digital twin of the spectacle lens, the respective ordered power of each digital twin of the spectacle lens, the ordered power of the predefined digital twin of the spectacle lens and the ordered power of the intermediate digital twin of the spectacle lens are the same. The spectacle lens which the digital twin of the spectacle lens is based on, i.e., the spectacle lens which has been measured to create a respective digital twin of the spectacle lens, has been manufactured according to the predefined digital twin which in turn has been calculated by optimization towards an optical target based on said same ordered power. The spectacle lens transferred to physical reality by manufacturing the compensated digital twin of the spectacle lens is intended for said same ordered power.

An "optical power error" is defined as a deviation of an optical power in each discrete x,y,z position from the ordered power. Said deviation preferably comprises at least one selected from the group consisting of

    (i) an optical mean power of the optical power error,
    (ii) an optical astigmatism of the optical power error,
    (iii) an axis of said optical astigmatism of the optical power error.

Said deviation is a difference of the optical power in each discrete x,y,z position and the ordered power, preferably optical power minus ordered power.

The before-given general definition for the optical power error may be applicable for any digital twin of the spectacle lens and the spectacle lens.

For each digital twin of said set of n digital twins, a respective "optical power error of each digital twin of the spectacle lens" is defined as a deviation of an optical power of each digital twin of the spectacle lens in each discrete x,y,z position from the ordered power of the predefined digital twin of the spectacle lens. Said deviation preferably comprises at least one selected from the group consisting of

    (i) an optical mean power of the optical power error,
    (ii) an optical astigmatism of the optical power error,
    (iii) an axis of said optical astigmatism of the optical power error.

Said deviation is a difference of the optical power of each digital twin of the spectacle lens in each discrete x,y,z position and the ordered power of the predefined digital twin of the spectacle lens, preferably optical power minus ordered power.

Thus, for n equals one, the optical power error of the digital twin of the spectacle lens is defined as the deviation of the optical power of the digital twin of the spectacle lens in each discrete x,y,z position from the ordered power of the predefined digital twin of the spectacle lens.

An "optical power error of the predefined digital twin of the spectacle lens" is defined as a deviation of an optical power the predefined digital twin of the spectacle lens in each x,y,z position from the ordered power of said predefined digital twin. Said deviation preferably comprises at least one selected from the group consisting of

(i) an optical mean power of the optical power error,
(ii) an optical astigmatism of the optical power error,
(iii) an axis of said optical astigmatism of the optical power error.

Said deviation is a difference of the optical power of the predefined digital twin of the spectacle lens in each discrete x,y,z position and the ordered power of said predefined digital twin, preferably optical power minus ordered power.

An "optical power error of the intermediate digital twin of the spectacle lens" is defined, analogously as the respective optical power error of each digital twin of the spectacle lens and the optical power error of the predefined digital twin, as a deviation of an optical power the intermediate digital twin of the spectacle lens in each x,y,z position from the ordered power of the predefined digital twin of the spectacle lens.

A "set of n optical power errors" comprises in each predefined discrete x,y,z position a deviation of the respective optical power of each digital twin out of the set of n digital twins of the spectacle lens from the ordered power of the predefined digital twin of the spectacle lens. As described before, said deviation preferably comprises at least one selected from the group consisting of

(i) the optical mean power of the optical power error,
(ii) the optical astigmatism of the optical power error,
(iii) the axis of said optical astigmatism of the optical power error.

Said deviation is the difference of the respective optical power in each discrete x,y,z position of each digital twin out of the set of n digital twins and the ordered power of the predefined digital, preferably optical power digital twin out of the set of n digital twins minus ordered power.

An "optical power error difference" is defined as a difference between two optical power errors in respective discrete x,y,z positions. The optical power error difference preferably comprises at least one selected from the group consisting of

(i) an optical mean power of the optical power error difference,
(ii) an optical astigmatism of the optical power error difference,
(iii) an axis of said optical astigmatism of the optical power error difference.

The before given general definition for the optical power error difference may be applicable between i) any digital twins of the spectacle lens or ii) any digital twin and the spectacle lens.

For each digital twin of said set of n digital twins, a respective "optical power error difference between each digital twin of the spectacle lens and the predefined digital twin of the spectacle lens" is defined as a difference between the optical power error of each digital twin of the spectacle lens and the optical power error of the predefined digital twin of the spectacle lens in each respective discrete x,y,z position, preferably respective optical power error of each digital twin minus optical power error of the predefined digital twin.

Thus, for n equals one, the optical power error difference of the digital twin of the spectacle lens is defined as the difference between the optical power error of the digital twin of the spectacle lens and the optical power error of the predefined digital twin of the spectacle lens in each respective discrete x,y,z position.

A "set of n optical power error differences" comprises in respective discrete x,y,z positions a difference between each optical power error of the set of n optical power errors and the optical power error of the predefined digital twin of the spectacle lens. The optical power error difference preferably comprises at least one selected from the group consisting of

(i) the optical mean power of the optical power error difference,
(ii) the optical astigmatism of the optical power error difference,
(iii) the axis of said optical astigmatism of the optical power error difference.

An "optical power" comprises with respect to a predefined eye model, a predefined as-worn position and a predefined object-distance model, in each predefined discrete x,y,z position an optical mean power, an optical astigmatism and an axis of said optical astigmatism. Said optical mean power is defined as an average between an optical minimum power and an optical maximum power in each predefined discrete x,y,z position. Said optical maximum power is defined as a reciprocal of a distance along a respective chief ray from a vertex surface to a point of minimum focal length in a plane T of minimum focal length, said chief ray passing through a respective predefined discrete x,y,z position, said respective predefined discrete x,y,z position determining a viewing direction of an eye of said predefined eye model. Said vertex surface being defined as a set of x,y,z positions, determined by surface points of an apex surface representing locations of an apex of a cornea when an eye rotates, and a fixed distance which is added to the apex surface at respective surface points in a direction that corresponds to the viewing direction of the eye when the apex of the cornea is located at a respective surface point, where the fixed distance is a vertex distance. Said vertex distance is defined analogously as in ISO 13666:2019(E), entry 3.2.40, as horizontal distance between a back surface (3.2.14) of one of following (i) to (iv), i.e.,

(i) the digital twin of the spectate lens, or
(ii) each digital twin of the spectacle lens, or
(iii) the predefined digital twin of the spectacle lens, or
(iv) any digital twin of a spectacle lens, in particular the intermediate digital twin of the spectacle lens, and an apex of a cornea, assumed with eyes in a primary position (3.2.26). Said optical minimum power is defined as a reciprocal of a distance along said respective chief ray from said vertex surface to a maximum focal point in a plane S of maximum focal length, said plane S of maximum focal length is perpendicular to said plane T of minimum focal length. Said optical astigmatism is defined as a difference between said optical maximum power and said optical minimum power in each predefined discrete x,y,z position. Said axis of said optical astigmatism is defined in a plane comprising said point of minimum focal length, said plane is perpendicular to said respective chief ray, said axis is defined as an angle between an intersection line of an x,z plane with said plane and an intersection line of said plane T of minimum focal length with said plane.

The before-given general definition for the optical power may be applicable for any digital twin of the spectacle lens. One example for an eye model comprising an apex surface is an eye model where the apex surface is part of a sphere and the eye rotates around a single centre of rotation. In this case, said vertex surface is a vertex sphere. Said optical maximum power is then defined as a reciprocal of a distance along a respective chief ray from said vertex sphere to a point of minimum focal length in a plane T of minimum focal length, said chief ray passing through a respective predefined discrete x,y,z position and said centre of rotation of an eye of said predefined eye model. Said vertex sphere has as a centre said centre of rotation of said eye and as a radius a sum of a vertex distance defined analogously as in ISO 13666:2019(E), entry 3.2.40, and a distance from an apex of a cornea of said eye to said centre of rotation.

A respective "optical power of each digital twin of the spectacle lens", an "optical power of the predefined digital twin of the spectacle lens", an "optical power of the intermediate digital twin of the spectacle lens", each comprises with respect to a predefined eye model, a predefined as-worn position and a predefined object-distance model, in each predefined discrete x,y,z position, an optical mean power, an optical astigmatism and an axis of said optical astigmatism. The definitions of the optical mean power, the optical astigmatism and the axis of said optical astigmatism given before with respect to the optical power shall apply accordingly.

Thus, for n equals one, the optical power of the digital twin of the spectacle lens comprises with respect to a predefined eye model, a predefined as-worn position and a predefined object-distance model, in each predefined discrete x,y,z position a respective optical mean power, a respective optical astigmatism and the axis of said optical astigmatism.

A "set of n optical powers" comprises with respect to a predefined eye model, a predefined as-worn position and a predefined object-distance model, in each predefined discrete x,y,z position the respective optical power of each digital twin of the set of n digital twin of the spectacle lens, the optical power comprising the optical mean power, the optical astigmatism and the axis of the optical astigmatism as defined before.

An "ordered mean power" is defined analogously as in note 1 to entry 3.13.12 (spherical equivalent power) of ISO 13666:2019(E), a value halfway between the ordered spherical power and the sum of the ordered spherical power and the ordered cylindrical power.

In "a set of n surface targets for optimization" or in general, a "surface target for optimization" is defined as a surface target value or a subset of surface target values. The surface target value or the subset of surface target values preferably comprises a value or values of a surface power defined analogously as in ISO 13666:2019(E), entry 3.10.4, in each predefined discrete x,y position. Said surface power defined analogously as in ISO 13666:2019(E), entry 3.10.4, is a local ability of said correction surface, or in general of a surface, to change a vergence of a virtual bundle of rays virtually incident at said correction surface or said surface. Analogously as in note 1 to entry ISO 13666:2019(E), entry 3.10.4, the surface power is determined from a radius or radii of said correction surface or said surface in each predefined discrete x,y position and a refractive index (3.1.5) of an optical material (3.3.1) in each predefined discrete x,y position, and is calculated for light (3.1.2) virtually incident or virtually emergent in air. The refractive index may be an actual refractive index of the optical material or a nominal value. The surface power determined from the radius or radii of said correction surface or said surface in each predefined discrete x,y position comprises one surface-power value in case the radius in each meridian in a predefined discrete x,y position is the same or two surface-power values in case the radii in at least two principal meridians, defined analogously as in ISO 13666:2019(E), entry 3.4.5, in a predefined discrete x,y position are different. A meridian of said each meridians in the predefined discrete x,y position is defined as a plane perpendicular to an x,y plane through said predefined discrete x,y position. The two principal meridians in the predefined discrete x,y position are defined analogously as in ISO 13666:2019(E), entry 3.4.5, as meridians in the predefined discrete x,y position with maximum and minimum curvatures.

The subset of surface target values can be transformed to comprise i) a value of a surface mean power, ii) a value of a surface cylindrical power defined analogously as in ISO 13666:2019(E), entry 3.10.6, iii) a value of an axis of said surface cylindrical power. The surface mean power is defined analogously as in ISO 13666:2019(E), entry 3.13.12, as focal power (3.10.2) of a surface halfway between the two surface-power values in the two principal meridians. The surface cylindrical power is defined analogously as in ISO 13666:2019(E), entry 3.10.6, as a difference between surface powers (3.10.4) in two principal meridians (3.4.5) of said correction surface, or in general of a surface, in each predefined discrete x,y,z position. Analogously as in note 1 to entry 3.10.6 of ISO 13666:2019(E), the surface cylindrical power is determined from radii of said correction surface or said surface in each predefined discrete x,y,z position and a refractive index (3.1.5) of an optical material (3.3.1) in each predefined discrete x,y,z position, and is calculated for light (3.1.2) virtually incident or virtually emergent in air. The refractive index may be an actual refractive index of the optical material or a nominal value. The axis of said surface cylindrical power is an angle of an orientation of a principal meridian of maximum surface power with relation to a reference axis and in a predefined sense of rotation. Preferably, said reference axis is parallel to the x direction of the x,y,z coordinate system and the predefined sense of rotation is counterclockwise when looking along the z direction from the object side onto the front surface of the lens.

An "optimization towards a set of n surface targets" is defined as a mathematical optimization using deviations of a surface to be optimized from the set of n surface targets for optimization in predefined discrete x,y positions as an objective function. A result of the optimization towards the set of n surface targets is an optimized surface, i.e., a mathematical description of said optimized surface. For said mathematical optimization a surface is selected and a parametric mathematical description of said surface is created. In said mathematical optimization, parameter values of said parametric mathematical description are determined such as to minimize the deviations from the set of n surface targets for optimization by finding either a minimum of the objective function or a value of the objective function according to a predetermined termination criterion of the optimization towards the set of n surface targets. In case the objective function is defined as a, preferably weighted, sum of squares of said deviations from the set of n surface targets in predefined discrete x,y positions, the optimization is a least-squares fit.

In the optimization towards the set of n surface targets, for each surface target in the set of n surface targets, the subset of surface target values preferably comprises values of the surface power in each x,y position that are equal to the optical power error difference in each x,y,z position between a respective digital twin of the spectacle lens out of the set of n digital twins of the spectacle lens, and the predefined digital twin of the spectacle lens. The surface power in each x,y position being equal to the optical power error difference in each x,y,z position preferably means that the surface mean power in each x,y position equals the mean power of the optical power error difference in each x,y,z position, the surface cylindrical power in each x,y position equals the astigmatism of the optical power error difference in each x,y,z position, and the axis of said surface cylindrical power in each x,y position equals the axis of the optical power error difference in each x,y,z position.

In a "set of n optical targets for optimization" or in general, an "optical target for optimization" is defined as an optical target value or as a subset of optical target values. The optical target value or the subset of optical target values preferably comprises a value or values of an optical power or an optical power error in each predefined discrete x,y,z position. The subset of optical target values can be transformed to comprise i) a value of an optical mean power, ii) a value of an optical astigmatism, iii) a value of an axis of said optical astigmatism.

An "optimization towards a set of n optical targets" is defined as a mathematical optimization using at least one deviation selected from the group consisting of a) the optical power of the predefined digital twin of the spectacle lens, b) the optical power error of the predefined digital twin of the spectacle lens, c) the optical power of the intermediate digital twin of the spectacle lens, and d) the optical power error of the intermediate digital twin of the spectacle lens from the set of n optical targets, for optimization in predefined discrete x,y,z positions each as an objective function. A result of the optimization towards the set of n optical targets is an optimized surface, i.e., a mathematical description of said optimized surface, of the predefined or the intermediate digital twin of the spectacle lens. For said mathematical optimization, a surface is selected and a parametric mathematical description of said surface is created, whereas a respective other surface is fixed, for example a parametric mathematical description of said other surface is fixed. As mentioned before, the optical power and the optical power error each is calculated with respect to a predefined eye model, a predefined as-worn position and a predefined object-distance model. In said mathematical optimization, parameter values of said parametric mathematical description are determined such as to minimize the deviations from the set of n optical targets for optimization by finding either a minimum of the objective function or a value of the objective function according to a predetermined termination criterion of the optimization towards the set of n optical targets. In case the objective function is defined as a, preferably weighted, sum of squares of said deviations from the set of n optical targets in predefined discrete x,y positions, the optimization is a least-squares fit.

A "predefined eye model" preferably comprises a model of the apex surface of said eye, determining the x,y,x positions of the apex of the cornea when the eye rotates, defining a location of the apex of the cornea for each viewing direction of the eye. Said x,y,z positions of the apex of the cornea when the eye rotates define the apex surface. In the most general case, this apex surface is can be measured for an individual eye in all generality. Preferably, the apex surface is modelled using a parametric mathematical description. One example is modelling the apex surface in form of an ellipsoid. Preferably, the apex surface is modelled as a surface which results from the x,y,z positions of the cornea when the eye rotates about a first rotation axis and about a second rotation axis which is not parallel to the first rotation axis, where the first rotation axis and the second rotation axis do not intersect. Each x,y,z position of the apex of the cornea then represents a first rotation angle defining a rotation of the eye about the first rotation axis and a second rotation angle defining a rotation of the eye about the second rotation axis. In particular, the first rotation axis may be a horizontal rotation axis about which the eye rotates for changing the vertical viewing direction while the second rotation axis may be a vertical rotation axis about which the eye rotates for changing the horizontal viewing direction. Such an apex surface represents a toroidal surface that is spherical in a section perpendicular to the first rotation axis and spherical in a section perpendicular to the second rotation axis where the radii of the spheres differ by the distance between the first rotation axis and the second rotation axis. The distance between the first rotation axis and the second rotation axis may be in the range from greater than 0 mm up to 7.5 mm. For example, a value may be in the range between 1 and 5 mm or, more specific, in the range between 2 mm and 4 mm.

Another example for such a predefined eye model is an eye model where the apex surface of the eye is a sphere that is defined by

- a centre of rotation of an eye, and
- a distance from an apex of a cornea of said eye to said centre of rotation of said eye.

Said distance from said apex of said cornea of said eye to said centre of rotation of said eye preferably is determined as a function of the ordered mean power, for example said distance being calculated as:

$$\text{distance} = 13.5 \text{ mm} - 0.2 \frac{mm}{D} \times \text{ordered mean power}.$$

Preferably said distance from said apex of said cornea of said eye to said centre of rotation of said eye is selected from one of the following ranges:

- a distance in a range of 9 mm to 19 mm,
- a distance in a range of 10 mm to 18 mm,
- a distance in a range of 11 mm to 16.5 mm.

A "predefined as-worn position" preferably comprises

- a vertex distance defined analogously as in ISO 13666:2019(E), entry 3.2.40, preferably the vertex distance is set to 12 mm, and
- a primary direction defined analogously as in ISO 13666:2019(E), entry 3.2.25, and
- an as-worn pantoscopic angle defined analogously as in ISO 13666:2019(E), entry 3.2.37, as vertical angle between a horizontal and a perpendicular to a reference line passing through an apex of grooves of upper and lower rims of a virtually represented frame in a vertical plane containing the primary direction. Further, analogously as in note 1 to entry 3.2.37 of ISO 13666:2019(E), an as-worn position (3.2.36) for distance vision is usually assumed in primary position (3.2.26) when assumed looking straight ahead in unaided vision, as in note 2 to entry, the as-worn pantoscopic angle is regarded as positive if a lower part of the digital twin of the spectacle lens or any digital twin of the spectacle lens or the predefined digital twin of the spectacle lens lies closer to a virtually represented face then an upper. The as-worn pantoscopic angle preferably is set to 0°, and
- an as-worn face form angle defined analogously as in ISO 13666:2019(E), entry 3.2.38, as horizontal angle between the primary direction (3.2.25) and a perpendicular to a reference line passing through an apex of grooves of nasal and temporal rims of a virtually represented frame in a horizontal plane containing the primary direction. Further, as in note 1 to entry 3.2.38 of ISO 13666:2019(E), a right or left as-worn face form angle is regarded as positive if a temporal side of a plane of a right or left shape of the digital twin of the spectacle lens or the predefined digital twin of the spectacle lens is posterior to a nasal side. For distance vision, this is usually assumed in primary position (3.2.26) when assumed looking straight ahead in unaided vision. The as-worn face form angle preferably is set to 0°.

A "predefined object-distance model" preferably comprises a distance from each discrete x,y,z position on the front surface of the digital twin of the spectacle lens to an object point or a distance from each discrete x,y,z position on the front surface of the predefined digital twin of the spectacle lens to an object point or a distance from each discrete x,y,z position on the front surface of any digital twin of the spectacle lens each to an object point. Said object point may be located at infinity where preferably infinity is defined as a distance of 10 m from each discrete x,y,z position on the respective front surface.

The problem mentioned in the beginning is fully solved. A concrete modifying step is provided for determining the correction surface of the digital twin of the spectacle lens for modifying the predefined digital twin of the spectacle lens by modifying one surface of the predefined digital twin of the spectacle lens, during which a surface of a calculated optical system is modified according to any one of the alternatives a), b1), b2) of claim 1 (a) the optimization towards the set of n surface targets, b1) subtracting each discrete z position, b2) subtracting the mathematical description) resulting in the compensated surface of the predefined digital twin of the spectacle lens, such that the dioptric function of a manufactured modified optical system, i.e., the optical power or the optical power error of the spectacle lens manufactured by transferring the compensated digital twin of the spectacle lens to physical reality, is substantially the same as the dioptric function of the calculated optical system, i.e., as the optical power or the optical power error of the predefined digital twin of the spectacle lens. The optical system data providing step S1 of WO 2016/202480 A1 is corresponding to providing the predefined digital twin of the spectacle lens, the modifying surface providing step S2 of WO 2016/202480 A1 is described concretely, as explained before, to provide the correction surface of the digital twin of the spectacle lens, skipping the complementary modifying surface determining step S3 of WO 2016/202480 A1 by leaving the respective other surface of the predefined digital twin of the spectacle lens unaltered, and combining the compensated surface of the predefined digital twin of the spectacle lens with the respective other surface of the predefined digital twin thus resulting in the compensated digital twin of the spectacle lens. The optical power or the optical power error of the compensated digital twin of the spectacle lens and the predefined digital twin of the spectacle lens is not the same, i.e., the dioptric function of the compensated digital twin of the spectacle lens differs from the dioptric function of the predefined digital twin of the spectacle lens and thus is just not substantially the same.

The concrete modifying step described before is also not disclosed in WO 2016/193771 A1 describing a method for compensating deviation in an optical lens manufacturing process. Such compensations are according to WO 2016/193771 A1 necessary as, due to deviations in a surfacing process, the optical power and optical design is not always perfectly on target. WO 2016/193771 A1 discloses in paragraph [0101] that "[T]the system may also be enhanced for design integrity compensation. The previous system includes design integrity measurements, which can be measured in several locations on the actual generated surface or for the entire final lens: near vision, far vision, intermediate vision and peripheral vision. The design integrity is measured in optical power maps. The variation of the optical power across the surfaced lens must match the expected design." In other words, WO 2016/193771 A1 suggests to either measure only one generated surface or to measure an optical power map of the entire final lens. A measured optical power map of the entire final lens is not the same as the optical power of the set of n digital twins of the spectacle lens or the optical power error of the set of n digital twins of the spectacle lens calculated with respect to a predefined eye model, a predefined as-worn position and a predefined object-distance model. The measured optical power map of the entire final lens, according to WO 2016/193771 A1, page 5, line 1, measured using a lens mapper, represents an optical power in each x,y position for unknown ray paths used by the lens mapper. In contrast thereto, the optical power and the optical power error in each x,y,z position of any digital twin of the spectacle lens is calculated for a spectacle lens wearer represented by the predefined eye model, the predefined as-worn position and the predefined object-distance model and thus using defined ray paths to simulate an actual perception of the spectacle lens wearer. Simulating the actual perception of the spectacle lens wearer cannot be directly provided by a measurement device such as the lens mapper. WO 2016/193771 A1 additionally describes in paragraphs [0053] and [0054] to measure a back or front surface of a spectacle lens. WO 2016/193771 A1 does not describe to measure both surfaces simultaneously to generate the digital twin of the spectacle lens that can be used for calculation for the spectacle lens wearer of the optical power and the optical power error of said digital twin of said spectacle lens, the spectacle lens wearer represented by the predefined eye model, the predefined as-worn position and the predefined object-distance model.

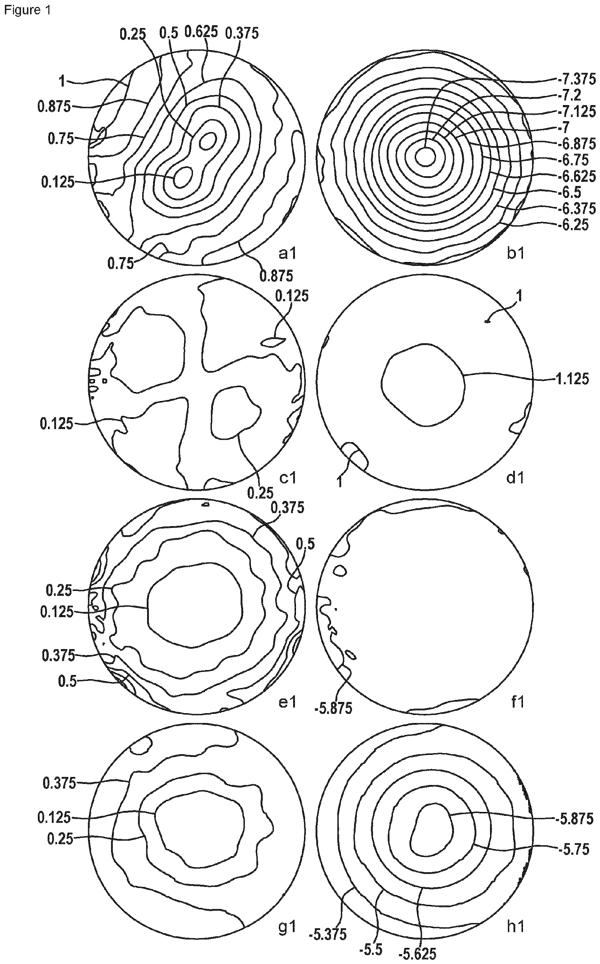

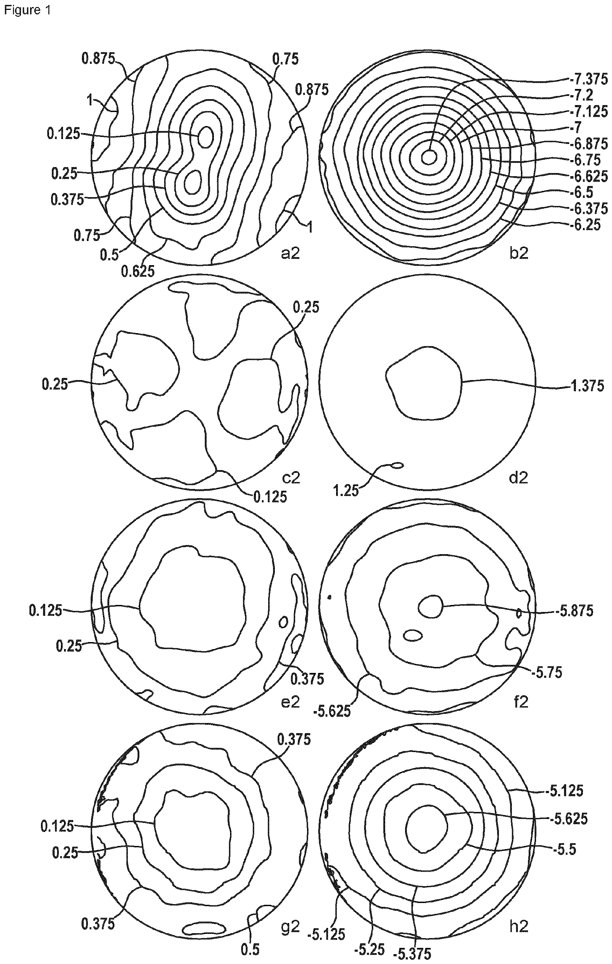

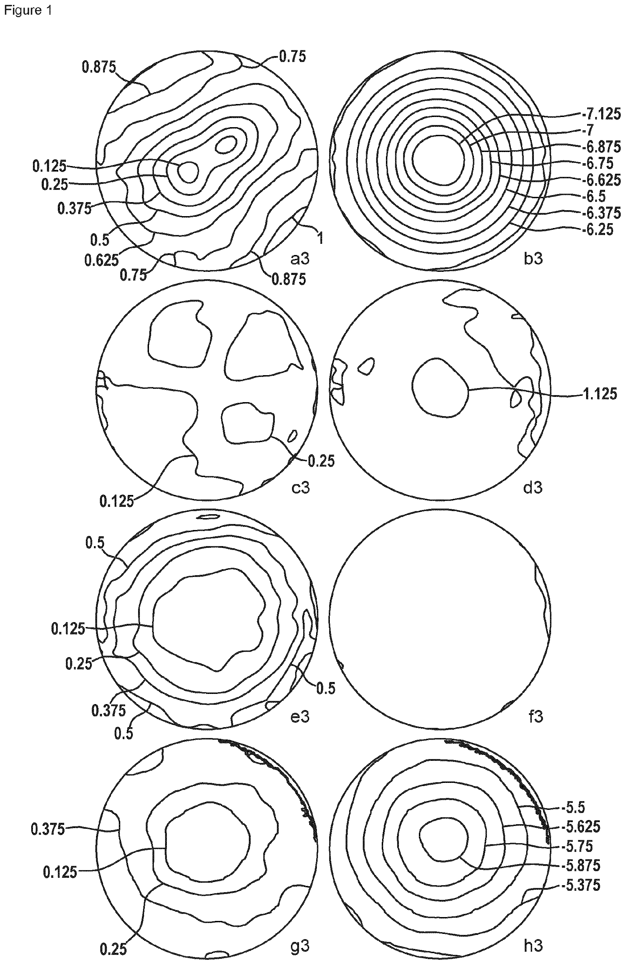

In Figure 1, as an example, it is shown, that the optical power of the digital twin of the spectacle lens is not the same as an optical power map measured on the spectacle lens that said digital twin was created from.

Figure 1 shows the difference between the optical power of three digital twins based on a predefined digital twin of the spectacle lens for ordered spherical power -6.00D. The optical power of said three digital twins has been calculated at discrete x,y positions within a diameter of 50mm around the optical centre for each respective digital twin for the object distance model of a constant distance of 10m to the front surface of each respective digital twin at each of said discrete x,y positions, the as-worn position comprising a vertex distance of 12mm, the primary direction straight ahead, the as-worn pantoscopic angle of 0° and the as-worn face form angle of 0° and an eye model comprising a centre of rotation of an eye at a distance of 14.7mm to the apex of the cornea of the eye.

The digital twins 1 to 3 are created from measurements of spectacle lenses 1 to 3 resulting from manufacturing the predefined digital twin of the spectacle lens. These measurements comprise coordinate-measuring machine (CMM) measurements of the front surfaces and the back surfaces in a same coordinate system for each spectacle lens.

Subfigures b1 to b3 show the surface mean power in each predefined x,y position in the form of a plot of contour lines of constant surface mean power within said diameter of 50mm around the optical centre of each respective digital twin 1 to 3 as derived from a CMM measurement of the front surface of the respective spectacle lens.

Subfigures d1 to d3 show the surface mean power in each predefined x,y position in the form of a plot of contour lines of constant surface mean power within said diameter of 50mm around the optical centre of each respective digital twin 1 to 3 as derived from a CMM measurement of the back surface of the respective spectacle lens.

Subfigures a1 to a3 show the surface cylindrical power in each predefined x,y position in the form of a plot of contour lines of constant surface cylindrical power within said diameter of 50mm around the optical centre of each respective digital twin 1 to 3 as derived from a CMM measurement of the front surface of the respective spectacle lens.

Subfigures c1 to c3 show the surface cylindrical power in each predefined x,y position in the form of a plot of contour lines of constant surface cylindrical power within said diameter of 50mm around the optical centre of each respective digital twin 1 to 3 as derived from a CMM measurement of the back surface of the respective spectacle lens.

Subfigures f1 to f3 show the optical mean power in each predefined x,y position in the form of a plot of contour lines of constant optical mean power within said diameter of 50mm around the optical centre of each respective digital twin 1 to 3 as calculated for the respective digital twin 1 to 3 for the above-defined object-distance model, the above-defined as-worn position and the above-defined eye model and the surface geometries of front surface and back surface of each respective digital twin 1 to 3 are reconstructed from the CMM measurements of the back surface and the front surface of the respective spectacle lenses 1 to 3 resulting from manufacturing the predefined digital twin. Subfigures e1 to e3 show the optical astigmatism in each predefined x,y position in the form of a plot of contour lines of constant optical astigmatism within said diameter of 50mm around the optical centre of each respective digital twin 1 to 3 as calculated for the respective digital twin 1 to 3 for the above-defined object-distance model, the above-defined as-worn position and the above-defined eye model and the surface geometries of front surface and back surface of each respective digital twin 1 to 3 are reconstructed from the CMM measurements of the back surface and the front surface of the respective spectacle lenses 1 to 3 resulting from manufacturing the predefined digital twin. Subfigures h1 to h3 show the mean-power component of an optical power map in the form of a plot of contour lines of constant mean power within said diameter of 50mm around the optical centre of each respective spectacle lens 1 to 3, each from a measurement of the respective spectacle lens 1 to 3 resulting from manufacturing the predefined digital twin with the lens analysis system Class Plus (company Rotlex).

Subfigures g1 to g3 show the cylinder component of an optical power map in the form of a plot of contour lines of constant cylinder power within said diameter of 50mm around the optical centre of each respective spectacle lens 1 to 3, each resulting from a measurement of the respective spectacle lens 1 to 3 resulting from manufacturing the predefined digital twin with the lens analysis system Class Plus (company Rotlex).

Comparing the respective optical astigmatism to the respective cylinder components of the optical power maps for the corresponding spectacle lenses and digital twins, i.e., comparing e1 to g1, e2 to g2 and e3 to g3, there is a similarity visible between the optical astigmatism for the predefined object-distance model, the predefined as-worn position and the predefined eye model and the cylinder component of the measured optical power map.

Comparing the respective optical mean powers to the respective mean-power components of the optical power maps for the corresponding spectacle lenses and digital twins, i.e. comparing f1 to h1, f2 to h2 and f3 to h3, there is a clear difference visible between the optical mean power of each respective digital twin 1 to 3 for the above-defined object-distance model, the above-defined as-worn position and the above-defined eye model and the mean-power component of the directly-measured optical power map. The calculation of the optical mean power and the optical astigmatism (f1 to f3 resp. e1 to e3) is done for the ray-paths that simulate the wearer's perception and are different from the ray-paths inherent to the measurement device that measured the optical power maps (h1 to h3 and g1 to g3).

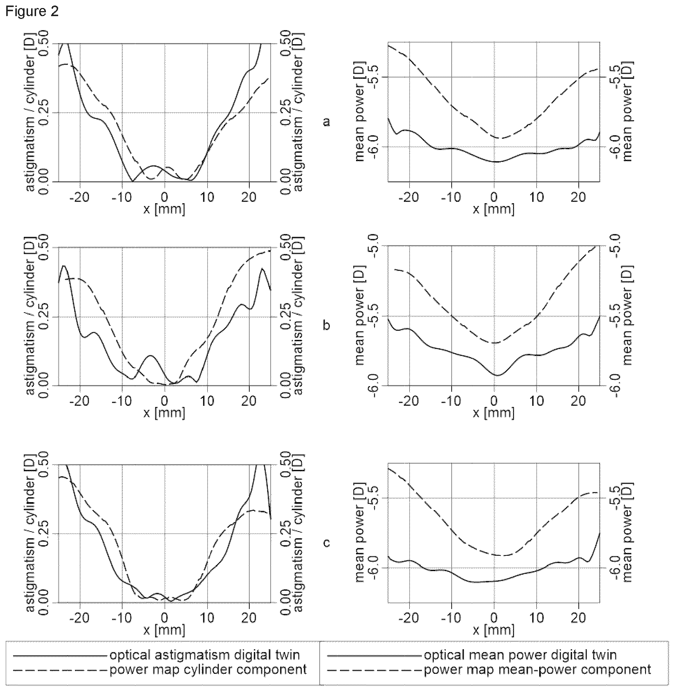

The difference, especially between the respective optical mean powers of the digital twins 1 to 3 and the mean-power components of the respective power maps can be seen even better in Figure 2, where subfigure a shows the optical astigmatism and optical mean power for the digital twin 1 along the line y = 0 and -25mm < x < 25mm compared to the cylinder component and mean-power component of the optical power map as measured from spectacle lens 1, subfigure b shows the optical astigmatism and optical mean power for the digital twin 2 along the line y = 0 and -25mm < x < 25mm compared to the cylinder component and mean-power component of the optical power map as measured from spectacle lens 2, and subfigure c shows the optical astigmatism and optical mean power for the digital twin 3 along the line y = 0 and -25mm < x < 25mm compared to the cylinder component and mean-power component of the optical power map as measured from spectacle lens 3. Thus, a lens mapper is not able to reproduce the optical power of a given spectacle lens as perceived by the wearer for the predefined object-distance model, the predefined as-worn position and the predefined eye model and cannot replace creating a digital twin of the spectacle lens and calculating the optical power for the predefined object-distance model, the predefined as-worn position, and the predefined eye model.

The method being configured for calculating by the computer the compensated digital twin of the spectacle lens for the purpose of the use of the compensated digital twin for the manufacture of the spectacle lens, said compensated digital twin being based on the predefined digital twin of the spectacle lens, the method is characterized in that in said set of n digital twins n equals one.

Phrased differently, the method being configured for calculating by the computer the compensated digital twin of the spectacle lens for the purpose of the use of the compensated digital twin for the manufacture of the spectacle lens, said compensated digital twin being based on the predefined digital twin of the spectacle lens, the method is characterized in the step of:

- combining a compensated surface of a predefined digital twin of a spectacle lens with a respective other surface of said predefined digital twin resulting in said compensated digital twin,

said compensated surface of said predefined digital twin resulting from

(i) an addition of each discrete z position of a correction surface in each predefined discrete x,y position of a digital twin of a spectacle lens to a respective discrete z position of a respective surface in a respective discrete x,y position of said predefined digital twin, or
(ii) an addition of a mathematical description of a correction surface of a digital twin of a spectacle lens to a mathematical description of a respective surface of said predefined digital twin,

said correction surface of said digital twin being determined by

a) an optimization towards a surface target using an optical power error difference as the surface target for optimization, or
b1) a subtraction of each discrete z position of an optimized surface of an intermediate digital twin of a spectacle lens in each predefined discrete x,y position from a respective discrete z position of a respective surface of said predefined digital twin in a respective discrete x,y position, said optimized surface of said intermediate digital twin being calculated by using b1a) an optical power of said digital twin in each predefined discrete x,y,z position or b1b) an optical power error of said digital twin in each predefined discrete x,y,z position, each as an optical target for optimization of said intermediate digital twin, said intermediate digital twin having one surface identical to a respective surface of said predefined digital twin, or
b2) a subtraction of a mathematical description of an optimized surface of an intermediate digital twin of a spectacle lens from a mathematical description of a respective surface of said predefined digital twin, said optimized surface of said intermediate digital twin being calculated by using b2a) an optical power of said digital twin in each predefined discrete x,y,z position or b2b) an optical power error of said digital twin in each predefined discrete x,y,z position each as an optical target for optimization of said intermediate digital twin, said intermediate digital twin having one surface identical to a respective surface of said predefined digital twin,

said optical power error difference being, in each predefined discrete x,y,z position, a difference between an optical power error of said digital twin and an optical power error of said predefined digital twin,
said optical power error of said digital twin being a deviation of an optical power of said digital twin from an ordered power in each predefined discrete x,y,z position of said predefined digital twin,
said optical power error of said predefined digital twin being a deviation of an optical power of said predefined digital twin from said ordered power in each predefined discrete x,y,z position of said predefined digital twin,
said optical power of said digital twin comprising, with respect to a predefined eye model, a predefined as-worn position and a predefined object-distance model, in each predefined discrete x,y,z position, an optical mean power, an optical astigmatism and an axis of said optical astigmatism,
said optical mean power being defined as an average between an optical minimum power and an optical maximum power in each predefined discrete x,y,z position,
said optical maximum power being defined as a reciprocal of a distance along a respective chief ray from a vertex surface to a point of minimum focal length in a plane T of minimum focal length, said chief ray passing through a respective predefined discrete x,y,z position determining a viewing direction of an eye of said predefined eye model,
said vertex surface being defined as a set of x,y,z positions, determined by surface points of an apex surface representing locations of an apex of a cornea when an eye rotates, and a fixed distance which is added to the apex surface at respective surface points in a direction that corresponds to the viewing direction of the eye when the apex of the cornea is located at a respective surface point, where the fixed distance is a vertex distance defined analogously as in ISO 13666:2019(E), entry 3.2.40,
said optical minimum power being defined as a reciprocal of a distance along said respective chief ray from said vertex surface to a maximum focal point in a plane S of maximum focal length,
said plane S of maximum focal length being perpendicular to said plane T of minimum focal length, said optical astigmatism being defined as a difference between said optical maximum power and said optical minimum power of said digital twin in each predefined discrete x,y,z position,

and said axis of said optical astigmatism being defined in a plane comprising said point of minimum focal length, said plane being perpendicular to said respective chief ray, said axis being defined as an angle between an intersection line of an x,z plane with said plane and an intersection line of said plane T of minimum focal length with said plane, said optical power of said predefined digital twin comprising, with respect to said predefined eye model, said predefined as-worn position and said predefined object-distance model, in each predefined discrete x,y,z position, an optical mean power, an optical astigmatism and an axis of said optical astigmatism, said ordered power of said digital twin comprising at least an ordered spherical power, said ordered power of said predefined digital twin comprising at least said ordered spherical power.

The compensated digital twin of the spectacle lens, as described before, is having one surface, i.e., either the front surface or the back surface, identical to a respective surface of the predefined digital twin of the spectacle lens. The compensated digital twin of the spectacle lens is having a respective other surface, i.e., either the back surface or the front surface, that has been modified to result in a compensated surface. Said modification of said one surface is done by

(i) an addition of each discrete z position of a correction surface of a digital twin of a spectacle lens in each predefined discrete x,y position to a respective z position of a respective surface of said predefined digital twin in a respective discrete x,y position, or
(ii) an addition of a mathematical description of a correction surface of a digital twin of a spectacle lens to a mathematical description of a respective surface of said predefined digital twin.

Said correction surface of said digital twin is determined by

a) an optimization towards a surface target using an optical power error difference as the surface target for optimization, or
b1) a subtraction of each discrete z position of an optimized surface of an intermediate digital twin in each predefined discrete x,y position from a respective discrete z position of a respective surface of said predefined digital twin in a respective discrete x,y position, said optimized surface of said intermediate digital twin being calculated by using b1a) an optical power of said digital twin in each predefined discrete x,y,z position or b1b) an optical power error of said digital twin in each predefined discrete x,y,z position each as an optical target for optimization of said intermediate digital twin, said intermediate digital twin having one surface identical to a respective surface of said predefined digital twin, or
b2) a subtraction of a mathematical description of an optimized surface of an intermediate digital twin of a spectacle lens from a mathematical description of a respective surface of said predefined digital twin, said optimized surface of said intermediate digital twin being calculated by using b2a) an optical power of said digital twin in each predefined discrete x,y,z position or b2a) an optical power error of said digital twin in each predefined discrete x,y,z position each as an optical target for optimization of said intermediate digital twin, said intermediate digital twin having one surface identical to a respective of said predefined digital twin.

The intermediate digital twin of the spectacle lens, as described before, is having one surface, i.e., either the front surface or the back surface, identical to a respective surface of the predefined digital twin, and a respective other surface, i.e., either the back surface or the front surface, that preferably results from an optimization towards an optical target where the optical target is either an optical power in each predefined discrete x,y,z position of the digital twin of said spectacle lens or an optical power error in each predefined discrete x,y,z position of the digital twin of said spectacle lens.

An "optimization towards a surface target" is defined as a mathematical optimization using deviations of a surface to be optimized from the surface target for optimization in predefined discrete x,y positions as an objective function. A result of the optimization towards the surface target is an optimized surface, i.e., a mathematical description of said optimized surface. For said mathematical optimization a surface is selected and a parametric mathematical description of said surface is created. In said mathematical optimization, parameter values of said parametric mathematical description are determined such as to minimize the deviations from the surface target for optimization by finding either a minimum of the objective function or a value of the objective function according to a predetermined termination criterion of the optimization towards the surface target. In case the objective function is defined as a, preferably weighted, sum of squares of said deviations from the surface target in predefined discrete x,y positions, the optimization is a least-squares fit.

In the optimization towards the surface target, the set of surface target values preferably comprises values of the surface power in each x,y position that are equal to the optical power error difference in each x,y,z position between the digital twin of the spectacle lens and the predefined digital twin of the spectacle lens. The surface power in each x,y position being equal to the optical power error difference in each x,y,z position preferably means that the surface mean power in each x,y position equals the mean power of the optical power error difference in each x,y,z position, the surface cylindrical power in each x,y position equals the astigmatism of the optical power error difference in each x,y,z position, and the axis of said surface cylindrical power in each x,y position equals the axis of the optical power error difference in each x,y,z position.

An "optimization towards an optical target" is defined as a mathematical optimization using at least one deviation selected from the group consisting of a) the optical power of the predefined digital twin of the spectacle lens from the optical target for optimization, b) the optical power error of the predefined digital twin of the spectacle lens from the optical target for optimization, c) the optical power of the intermediate digital twin of the spectacle lens from the optical target for optimization, and d) the optical power error of the intermediate digital twin of the spectacle lens from the optical target for optimization, each deviation calculated in predefined discrete x,y,z positions, each as an objective function. A result of the optimization towards the optical target is an optimized surface, i.e., a mathematical description of said optimized surface, and the predefined or the intermediate digital twin of the spectacle lens. For said mathematical optimization a surface is selected and a parametric mathematical description of said surface is created, whereas a respective other surface is fixed, for example a parametric mathematical description of said other surface is fixed. As mentioned before, the optical power and the optical power error each is calculated with respect to a predefined eye model, a predefined as-worn position and a predefined object-distance model. In said mathematical optimization, parameter values of said parametric mathematical description are determined such as to minimize the deviations from the optical target for optimization by finding either a minimum of the objective function or a value of the objective function according to a predetermined termination criterion of the optimization towards the optical target. In case the objective function is defined as a, preferably weighted, sum of squares of said deviations from the optical target in predefined discrete x,y positions, the optimization is a least-squares fit.

As explained before, the problem mentioned in the beginning is fully solved. A concrete modifying step is provided for determining the correction surface of the digital twin of the spectacle lens for modifying the predefined digital twin of the spectacle lens by modifying one surface of the predefined digital twin of the spectacle lens, during which a surface of a calculated optical system is modified according to any one of the alternatives a), b1), b2) of claim 1 (a) the optimization towards the surface target, b1) subtracting each discrete z position, b2) subtracting the mathematical description) resulting in the compensated surface of the predefined digital twin of the spectacle lens, such that the dioptric function of a manufactured modified optical system, i.e., the optical power or the optical power error of the spectacle lens manufactured by transferring the compensated digital twin of the spectacle lens to physical reality, is substantially the same as the dioptric function of the calculated optical system, i.e., as the optical power or the optical power error of the predefined digital twin of the spectacle lens.

As further explained before, the measured optical power map of the entire final lens as in

WO 2016/193771 A1 is not the same as the optical power of the digital twin of the spectacle lens or the optical power error of the digital twin of the spectacle lens calculated with respect to a predefined eye model, a predefined as-worn position and a predefined object-distance model.

The method being configured for calculating by the computer the compensated digital twin of the spectacle lens for the purpose of the use of the compensated digital twin for the manufacture of the spectacle lens, said compensated digital twin being based on the predefined digital twin of the spectacle lens, the method preferably being characterized in that for determining the correction surface of said set of n digital twins according to a), i.e., by the optimization towards the set of n surface targets using the set of n optical power error differences as the set of n surface targets for optimization, a parametric mathematical description of said correction surface is created, and parameter values of said parametric mathematical description are determined by the optimization.

A "parametric mathematical description of a surface" is a mathematical description for z values of said surface as a function of x,y values and additional parameters. The parametric mathematical description of the surface is a closed mathematical description used in the optimization towards the set of n surface targets or in the optimization towards the set of n optical targets.

A "parametric mathematical description of the correction surface" is a mathematical description for z values of said correction surface as a function of x,y values and additional parameters. The parametric mathematical description of the correction surface is a closed mathematical description used in the optimization towards the set of n surface targets.

Determining parameter values of said parametric mathematical description by the optimization towards the set of n surface targets means, as explained before, that the parameter values are determined such as to minimize the deviations from the set of n surface targets for optimization by finding either a minimum of the objective function or a value of the objective function according to a predetermined termination criterion of the optimization towards the set of n surface targets.

For n equals one, the method being configured for calculating by the computer the compensated digital twin of the spectacle lens for the purpose of the use of the compensated digital twin for the manufacture of the spectacle lens, said compensated digital twin being based on the predefined digital twin of the spectacle lens, the method preferably being characterized in that for determining the correction surface of said digital twin according to a), i.e., by the optimization towards the surface target using the optical power error difference as the surface target for optimization, a parametric mathematical description of said correction surface is created, and parameter values of said parametric mathematical description are determined by the optimization.

For n equals one, the parametric mathematical description of the correction surface is a closed mathematical description used in the optimization towards the surface target.

For n equals one, determining parameter values of said parametric mathematical description by the optimization towards the surface target means that the parameter values are determined such as to minimize the deviations from the surface target for optimization by finding either a minimum of the objective function or a value of the objective function according to a predetermined termination criterion of the optimization towards the surface target.

The method being configured for calculating by the computer the compensated digital twin of the spectacle lens for the purpose of the use of the compensated digital twin for the manufacture of the spectacle lens, said compensated digital twin being based on the predefined digital twin of the spectacle lens, the method preferably being characterized in that for determining the correction surface of said set of n digital twins according to b1) or b2), i.e., b1) subtracting each discrete z position, b2) subtracting the mathematical description, a parametric mathematical description of said optimized surface of said intermediate digital twin is created, and parameter values of said parametric mathematical description are determined by an optimization towards the set of n optical targets for optimization.

A "parametric mathematical description of the optimized surface" is a mathematical description for z values of said optimized surface as a function of x,y values and additional parameters. The parametric mathematical description of the optimized surface is a closed mathematical description used in the optimization towards the set of n optical targets.

Determining parameter values of said parametric mathematical description by the optimization towards a set of n optical targets means, as explained before, that the parameter values are determined such as to minimize the deviations from the set of n optical targets for optimization by finding either a minimum of the objective function or a value of the objective function according to a predetermined termination criterion of the optimization towards the set of n optical targets.

For n equals one, the method being configured for calculating by the computer the compensated digital twin of the spectacle lens for the purpose of the use of the compensated digital twin for the manufacture of the spectacle lens, said compensated digital twin being based on the predefined digital twin of the spectacle lens, the method preferably being characterized in that for determining the correction surface of said digital twin according to b1) or b2), i.e., b1) subtracting each discrete z position, b2) subtracting the mathematical description, a parametric mathematical description of said optimized surface of said intermediate digital twin is created, and parameter values of said parametric mathematical description are determined by an optimization towards the optical target for optimization.

For n equals one, the parametric mathematical description of the correction surface is a closed mathematical description used in the optimization towards the optical target.

For n equals one, determining parameter values of said parametric mathematical description by the optimization towards the optical target for optimization by finding either a minimum of the objective function or a value of the objective function according to a predetermined termination criterion of the optimization towards the optical target.

The method being configured for calculating by the computer the compensated digital twin of the spectacle lens for the purpose of the use of the compensated digital twin for the manufacture of the spectacle lens, said compensated digital twin being based on the predefined digital twin of the spectacle lens, the method preferably being characterized in that said parametric mathematical description is a parametric mathematical description of an aspherical surface as defined in ISO 13666:2019(E), entry 3.4.3 or an atoroidal surface as defined in ISO 13666:2019(E), entry 3.4.7.

An "aspherical surface" is as defined in ISO 13666:2019(E), entry 3.4.3, a surface of revolution having continuously variable curvature over all or part of its area.

An "atoroidal surface" is as defined in ISO 13666:2019(E), entry 3.4.7, a surface having mutually perpendicular principal meridians (3.4.5) or unequal curvature, at least one of which has asphericity (3.4.4).

In case of the predefined digital twin of the spectacle lens being a predefined digital twin of a spectacle lens with reflection symmetry along two perpendicular meridians, a respective compensated digital twin of said spectacle lens or a respective intermediate digital twin of said spectacle lens also should exhibit at least said same reflection symmetry along said same two perpendicular meridians. Thus, preferably, the front surface and the back surface of said predefined digital twin of said spectacle lens with reflection symmetry along two perpendicular meridians, the front surface and the back surface of said respective compensated digital twin of said spectacle lens and, the front surface and the back surface of said respective intermediate digital twin of said spectacle lens each is a surface with said same reflection symmetry along said same two perpendicular meridians. Therefore, also the correction surface of the respective digital twin of said spectacle lens shall be a surface with said same reflection symmetry along said same two principal meridians. Accordingly, any parametric mathematical representation of any of said surfaces with said reflection symmetry along said two perpendicular meridians preferably enforces said same reflection symmetry along said same two principal meridians and thus, preferably, one surface of said predefined digital twin of said spectacle lens with reflection symmetry along two perpendicular meridians, said respective compensated digital twin of said spectacle lens and, said respective intermediate digital twin of said spectacle lens each is a spherical surface as defined in ISO 13666:2019(E), entry 3.4.1. Said one spherical surface preferably being identical in each of said predefined digital twin of said spectacle lens with reflection symmetry along two perpendicular meridians, said respective compensated digital twin of said spectacle lens and, said respective intermediate digital twin of said spectacle lens. The respective other surface of said predefined digital twin of said spectacle lens with reflection symmetry along two perpendicular meridians, said respective compensated digital twin of said spectacle lens and, said respective intermediate digital twin of said spectacle lens preferably each is an atoroidal surface with said same reflection symmetry along said same two perpendicular meridians. As a consequence, a parametric mathematical description of the correction surface used in the optimization towards the surface target is a parametric mathematical description of an atoroidal surface with said same reflection symmetry along said same two perpendicular meridians or a parametric mathematical description of the optimized surface of the predefined digital twin of said spectacle lens or the optimized surface of the intermediate digital twin of said spectacle lens, each used in the optimization towards the optical target, each is a parametric mathematical description of an atoroidal surface with said same reflection symmetry along said same two perpendicular meridians. Each atoroidal surface preferably being not identical in each of said predefined digital twin of said spectacle lens with reflection symmetry along two perpendicular meridians, said respective compensated digital twin of said spectacle lens and, said respective intermediate digital twin of said spectacle lens, however each atoroidal surface of each of said predefined digital twin of said spectacle lens with reflection symmetry along two perpendicular meridians, said respective compensated digital twin of said spectacle lens preferably is having said same reflection symmetry along said same two perpendicular meridians.

In case of the predefined digital twin of the spectacle lens being a predefined digital twin of a spectacle lens with rotational symmetry, a respective compensated digital twin of said spectacle lens or a respective intermediate digital twin of said spectacle lens also should exhibit said rotational symmetry. Thus, preferably, the front surface and the back surface of said predefined digital twin of said spectacle lens with rotational symmetry, the front surface and the back surface of said respective compensated digital twin of said spectacle lens and, the front surface and the back surface of said respective intermediate digital twin of said spectacle lens each is a surface with said rotational symmetry. Therefore, also the correction surface of the respective digital twin of said spectacle lens shall be a surface with rotational symmetry. Accordingly, any parametric mathematical representation of any of said surfaces with said rotational symmetry preferably enforces said symmetry and thus, preferably, one surface of said predefined digital twin of said spectacle lens, said respective compensated digital twin of said spectacle lens and, said respective intermediate digital twin of said spectacle lens each is a spherical surface as defined in ISO 13666:2019(E), entry 3.4.1. Said one spherical surface preferably being identical in each of said predefined digital twin of said spectacle lens with rotational symmetry, said respective compensated digital twin of said spectacle lens and, said respective intermediate digital twin of said spectacle lens. The respective other surface of said predefined digital twin of said spectacle lens with rotational symmetry, said respective compensated digital twin of said spectacle lens and, said respective intermediate digital twin of said spectacle lens preferably each is an aspherical surface with said rotational symmetry. As a consequence, a parametric mathematical description of the correction surface used in the optimization towards the surface target is a parametric mathematical description of an aspherical surface with said rotational or a parametric mathematical description of the optimized surface of the predefined digital twin of said spectacle lens or the optimized surface of the intermediate digital twin of said spectacle lens, each used in the optimization towards the optical target, each is a parametric mathematical description of an aspherical surface with said rotational symmetry. Each aspherical surface preferably being not identical in each of said predefined digital twin of said spectacle lens with rotational symmetry, said respective compensated digital twin of said spectacle lens and, said respective intermediate digital twin of said spectacle lens, however each aspherical surface of each of said predefined digital twin of said spectacle lens with rotational symmetry, said respective compensated digital twin of said spectacle lens preferably is having said rotational symmetry around a same axis. Said same axis preferably is the optical axis of each of said predefined digital twin of said spectacle lens with rotational symmetry and said respective compensated digital twin of said spectacle lens.

Preferably, a predefined digital twin of a single-vision lens defined as in ISO 13666:2019(E), entry 3.7.1, but not of a position-specific single-vision spectacle lens as defined in ISO 13666:2019(E), entry 3.7.2, has a reflection symmetry along two perpendicular meridians, if the ordered power is with astigmatic effect as defined in ISO 13666:2019(E), entry 3.13.9, or a rotational symmetry, if the ordered power is without astigmatic effect. The astigmatic effect as defined in ISO 13666:2019(E), entry 3.13.9, is a collective description of cylindrical power (3.13.7) and cylinder axis (3.13.8).

The method being configured for calculating by the computer the compensated digital twin of the spectacle lens for the purpose of the use of the compensated digital twin for the manufacture of the spectacle lens, said compensated digital twin being based on the predefined digital twin of the spectacle lens, the method preferably being characterized in the steps of:

- adding said correction surface to a surface of each digital twin of said set of n digital twins, and
- combining said surface of each digital twin with a respective other surface of each respective digital twin resulting in a predictive digital twin of a spectacle lens of a set of n predictive digital twins of a spectacle lens.

A "predictive digital twin of a spectacle lens" is the mathematical description of the front surface for said spectacle lens, the mathematical description of the back surface for said spectacle lens, and the mathematical description of the refractive index distribution of the optical material for said spectacle lens. The mathematical description of either the front surface or the back surface of the predictive digital twin of the spectacle lens is the same mathematical description as in the digital twin of said spectacle lens, the same mathematical description being for a respective surface for said spectacle lens. The predictive digital twin of the spectacle lens is for the purpose of a use for a manufacture of the spectacle lens. The predictive digital twin of the spectacle lens preferably is used to verify, with respect to the predefined eye model, the predefined as-worn position and the predefined object-distance model, the correction surface of said digital twin of said spectacle lens by comparing the optical power or the optical power error of the predictive digital twin of the spectacle lens to the optical power or the optical power error of the predefined digital twin of the spectacle lens. The verification preferably allows to predict the optical power or the optical power error of the compensated digital twin of the spectacle lens after transfer to physical reality, i.e., the optical power or the optical power error of the spectacle lens manufactured based on said compensated digital twin. In other words, the verification preferably is a step before calculating the compensated surface of the predefined digital twin of the spectacle lens, i.e., before the addition of each discrete z position of the correction surface of the digital twin of the spectacle lens in each predefined discrete x,y position of said digital twin to a respective discrete z position of a respective surface in a respective discrete x,y position of the predefined digital twin of the spectacle lens or before the addition of the mathematical description of the correction surface of the digital twin of the spectacle lens to the mathematical description of a respective surface of the predefined digital twin of the spectacle lens.

The mathematical descriptions include an orientation of the front surface to the back surface. Therefore, preferably, either the front surface and the back surface are described in a same coordinate system or a transformation between a coordinate system of the front surface to a coordinate system of the back surface, or vice versa, is known. The mathematical descriptions preferably are closed mathematical descriptions. The predictive digital twin of the spectacle lens is having one surface, i.e., either the front surface or the back surface, identical to a respective surface of the digital twin of the spectacle lens. The predictive digital twin of the spectacle lens is having a respective other surface, i.e., either the back surface or the front surface, to which the correction surface of the digital twin of the spectacle lens has been added. Preferably, the respective other surface of the predictive digital twin of the spectacle lens to which the correction surface of the digital twin of the spectacle lens has been added is

- the front surface of the digital twin if the compensated surface of the compensated digital twin is the front surface or
- the back surface of the digital twin if the compensated surface of the compensated digital twin is the back surface.

The correction surface is added to the respective other surface of the digital twin by

(0i) adding each discrete z position of the correction surface in each predefined discrete x,y position of the digital twin to a respective discrete z position of the respective other surface in a respective discrete x,y position of the digital twin, or

(0ii) adding the mathematical description of the correction surface of the digital twin of the spectacle lens to the mathematical description of the respective other surface of the digital twin.

In a "set of n predictive digital twins of a spectacle lens", $n \geq 1$, for n = 1, the set of n predictive digital twins of the spectacle lens is one predictive digital twin of a spectacle lens. For n > 1, the set of n predictive digital twins comprises more than one predictive digital twin, preferably n being in a same range as for the set of n digital twins of the spectacle lens. The set of n predictive digital twins of the spectacle lens is for the purpose of a use for a manufacture of the spectacle lens. In the set of n predictive digital twins, each predictive digital twin is based on a respective digital twin of the spectacle lens. In the set of n predictive digital twins of the spectacle lens each predictive digital twin is having one surface, i.e., either the front surface or the back surface, identical to a respective surface of a respective digital twin of the spectacle lens out of the set of n digital twins of the spectacle lens. In the set of n predictive digital twins of the spectacle lens each predictive digital twin is having a respective other surface, i.e., either the back surface or the front surface, to which the correction surface of the set of n digital twins of the spectacle lens has been added. The correction surface of the set of n digital twins is determined as one correction surface as described before. Preferably, the respective other surface of each predictive digital twin of the spectacle lens to which the correction surface of the set of n digital twins has been added is

- the front surface of a respective digital twin of the set of n digital twins if the compensated surface of the compensated digital twin is the front surface or
- the back surface of a respective digital twin of the set of n digital twins if the compensated surface of the compensated digital twin is the back surface.

The correction surface of the set of n digital twins is added to a respective other surface of the respective digital twin by

(0i) adding each discrete z position of the correction surface of the set of n digital twins of the spectacle lens in each predefined discrete x,y position of said set of n digital twins to a respective discrete z position of a respective surface in a respective discrete x,y position of the respective digital twin of the set of n digital twins, or

(0ii) adding of the mathematical description of the correction surface of the set of n digital twins of the spectacle lens to the mathematical description of a respective surface of the respective digital twin of the set of n digital twins.

The method being configured for calculating by the computer the compensated digital twin of the spectacle lens for the purpose of the use of the compensated digital twin for the manufacture of the spectacle lens, the method preferably being characterized in that said correction surface is equal for a group of predefined digital twins.

In said group of predefined digital twins, one surface of each predefined digital twin of the group of predefined digital twins is identical. In said group of predefined digital twins,

- the ordered power of at least one predefined digital twin of said group of predefined digital twins can differ from the ordered power of at least one other predefined digital twin of said group of predefined digital twins,
- the ordered power of at least one predefined digital twin of said group of predefined digital twins can be identical to the ordered power of at least one other predefined digital twin of said group of predefined digital twins,
- the ordered power of each predefined digital twin of said group of predefined digital twins can differ from the ordered power of each other predefined digital twin of said group of predefined digital twins,
- the ordered power of each predefined digital twin of said group of predefined digital twins can be identical to the ordered power of each other predefined digital twin of said group of predefined digital twins.

Preferably, in said group of predefined digital twins, the ordered power of each predefined digital twin of said group of predefined digital twins differs from the ordered power of each other predefined digital twin of said group of predefined digital twins. Although either at least one predefined digital twin of the group of digital twins is having a different ordered power to at least one predefined digital twin of said group or each predefined digital twin of said group is having a different ordered power to each other predefined digital twin of said group, a decisive benefit is that also such a group of predefined digital twins is having a respective identical correction surface. Preferably, if, the ordered power of each predefined digital twin of said group of predefined digital twins differs from the ordered power of each other predefined digital twin of said group of predefined digital twins, the compensated surface of each predefined digital twin of the group of predefined digital twins results from

(i) an addition of each discrete z position of the correction surface of the set of n digital twins of the spectacle lens, $n \geq 1$, in each predefined discrete x,y position of said set of n digital twins to a respective discrete z position of a respective surface in a respective discrete x,y position of a respective predefined digital twin of the group of predefined digital twins, or

(ii) an addition of a mathematical description of a correction surface of said set of n digital twins of a spectacle lens, $n \geq 1$, to a mathematical description of a respective surface of a respective predefined digital twin of the group of predefined digital twins,

whereby said respective surface of each predefined digital twin of said group of predefined digital twins is said one surface being identical. Thus, preferably, due to the fact that a same correction surface is used for each predefined digital twin of the group of predefined digital twins, the compensated surface of each predefined digital twin of the group of predefined digital twins is one identical surface only.

Preferably, if, the ordered power of each predefined digital twin of said group of predefined digital twins is identical to the ordered power of each other predefined digital twins of said group of predefined digital twins, the compensated surface of each predefined digital twin of the group of predefined digital twins results from

(i) an addition of each discrete z position of the correction surface of the set of n digital twins of the spectacle lens, $n \geq 1$, in each predefined discrete x,y position of said set of n digital twins to a respective discrete z position of a respective surface in a respective discrete x,y position of a respective predefined digital twin of the group of predefined digital twins, or

(ii) an addition of a mathematical description of a correction surface of said set of n digital twins of a spectacle lens, $n \geq 1$, to a mathematical description of a respective surface of a respective predefined digital twin of the group of predefined digital twins,

whereby said respective surface of each predefined digital twin of said group of predefined digital twins is a respective other surface than said one surface being identical. Thus, preferably, only one correction surface needs to be determined for the group of predefined digital twins.

The method being configured for calculating by the computer the compensated digital twin of the spectacle lens for the purpose of the use of the compensated digital twin for the manufacture of the spectacle lens, said compensated digital twin being based on the predefined digital twin of the spectacle lens, the method preferably being characterized in the step of - combining an iterated compensated surface of said compensated digital twin with a respective other surface of said predefined digital twin resulting in an iterated compensated digital twin of the spectacle lens.

The iterated compensated digital twin of the spectacle lens results from a repetition of the method described before by using the compensated digital twin of the spectacle lens instead of the predefined digital twin of the spectacle lens for obtaining the iterated compensated surface.

In detail, the iterated compensated surface of the iterated compensated digital twin of the spectacle lens results from

(iii) an addition of each discrete z position of an iterated correction surface of an iterated set of n' digital twins of the spectacle lens, n' ≥ 1, in each predefined discrete x,y position to a respective discrete z position of a respective surface of the compensated digital twin of the spectacle lens in a respective discrete x,y position, or

(iv) an addition of the mathematical description of an iterated correction surface of an iterated set of n' digital twins of the spectacle lens, n' ≥ 1, to the mathematical description of a respective surface of the compensated digital twin of the spectacle lens.

The iterated set of n' digital twins of the spectacle lens is created analogously to the set of n digital twins of the spectacle lens. The iterated set of n' digital twins is based on the compensated digital twin of the spectacle lens, whereas the set of n digital twins is based on the predefined digital twin of the spectacle lens. The iterated set of n' digital twins is based on the compensated digital twin of the spectacle lens transferred n' times to physical reality, i.e., the compensated digital twin manufactured n' times.

The iterated correction surface of the iterated set of n' digital twins is determined by

c) an optimization towards an iterated set of n' surface targets using an iterated set of n' optical power error differences as the iterated set of n' surface targets for optimization, or

d1) a subtraction of each discrete z position of an iterated optimized surface of an iterated intermediate digital twin of a spectacle lens in each predefined discrete x,y position from a respective discrete z position of a respective surface of the compensated digital twin of the spectacle lens in a respective discrete x,y position, said iterated optimized surface of said iterated intermediate digital twin being calculated by using d1a) an iterated set of n' optical powers of said iterated set of n' digital twins in each predefined discrete x,y,z position or d1b) an iterated set of n' optical power errors of said iterated set of n' digital twins in each predefined discrete x,y,z position, each as an iterated set of n' optical targets for optimization of said iterated intermediate digital twin, said iterated intermediate digital twin having one surface identical to a respective surface of said predefined digital twin, or

d2) a subtraction of the mathematical description of an iterated optimized surface of an iterated intermediate digital twin of a spectacle lens from the mathematical description of a respective surface of the compensated digital twin of the spectacle lens, said iterated optimized surface of said iterated intermediate digital twin being calculated by using d2a) an iterated set of n' optical powers of said iterated set of n' digital twins in each predefined discrete x,y,z position or d2b) an iterated set of n' optical power errors of said iterated set of n' digital twins in each predefined discrete x,y,z position each as an iterated set of n' optical targets for optimization of said intermediate digital twin, said iterated intermediate digital twin having one surface identical to a respective surface of said predefined digital twin.

In addition to the explanation of "any digital twin of the spectacle lens" given before, "any digital twin of the spectacle lens" may further comprise a predictive digital twin of a spectacle lens, each predictive digital twin of a spectacle lens of a set of n predictive digital twins, each digital twin of an iterated set of n digital twins and an iterated compensated digital twin.

In the iterated set of n' digital twins of the spectacle lens, the number "n'" may be equal to or different from the number n of the set of n digital twins of the spectacle lens. The number "n'" of the iterated set of "n'" optical targets or surface targets is equal to the number "n'" of the iterated set of "n'" digital twins. Once the number "n' " is selected for the compensated digital twin of the spectacle lens preferably the number "n'" is equal in all iterated steps of the method, preferably irrespective of the context on which the number "n'" is used.

In "an iterated set of n' surface targets for optimization", the surface target for optimization is defined as above but replacing the correction surface by the iterated correction surface.

An "optimization towards an iterated set of n' surface targets" is defined as the optimization towards the set of n surface targets but replacing n by n'.

In the optimization towards the iterated set of n' surface targets, for each surface target in the iterated set of n' surface targets, the subset of surface target values preferably comprises values of the surface power in each x,y position that are equal to the optical power error difference in each x,y,z position between a respective digital twin of the spectacle lens out of the iterated set of n' digital twins of the spectacle lens, and the compensated digital twin of the spectacle lens. As described before with respect to the optimization towards the set of n surface targets, the surface power in each x,y position being equal to the optical power error difference in each x,y,z position preferably means that the surface mean power in each x,y position equals the mean power of the optical power error difference in each x,y,z position, the surface cylindrical power in each x,y position equals the astigmatism of the optical power error difference in each x,y,z position, and the axis of said surface cylindrical power in each x,y position equals the axis of the optical power error difference in each x,y,z position.

In "an iterated set of n' optical targets for optimization", the optical target for optimization is defined as above.

An "optimization towards an iterated set of n' optical targets" is defined as a mathematical optimization using at least one deviation selected from the group consisting a) the optical power of the iterated intermediate digital twin of the spectacle lens, and b) the optical power error of the iterated intermediate digital twin of the spectacle lens from the iterated set of n' optical targets for optimization in predefined discrete x,y,z positions each as an objective function. A result of the optimization towards the iterated set of n' optical targets is an iterated optimized surface, i.e., a mathematical description of said iterated optimized surface, of the iterated intermediate digital twin of the spectacle lens. For said mathematical optimization, analogously as explained before, a surface is selected and a parametric mathematical description of said surface is created, whereas a respective other surface is fixed, for example a parametric mathematical description of said other surface is fixed. As mentioned before, the optical power and the optical power error each is calculated with respect to a predefined eye model, a predefined as-worn position and a predefined object-distance model. In said mathematical optimization, parameter values of said parametric mathematical description are determined such as to minimize the deviations from the iterated set of n' optical targets for optimization by finding either a minimum of the objective function or a value of the objective function according to a predetermined termination criterion of the optimization towards the iterated set of n' optical targets. In case the objective function is defined as a, preferably weighted, sum of squares of said deviations from the iterated set of n' optical targets in predefined discrete x,y positions, the optimization is a least-squares fit.

An "iterated set of n' optical powers" comprises with respect to a predefined eye model, a predefined as-worn position and a predefined object-distance model, in each predefined discrete x,y,z position the optical power of each digital twin out of the iterated set of n' digital twins, the optical power comprising the optical mean power, the optical astigmatism and the axis of the optical astigmatism as defined before.

An "iterated set of n' optical power errors" comprises in each predefined discrete x,y,z position a deviation of the optical power of each digital twin out of the iterated set of n' digital twins from the ordered power. As described before, said deviation preferably comprises at least one selected from the group consisting of

(i) the optical mean power of the optical power error,
(ii) the optical astigmatism of the optical power error,
(iii) the axis of said optical astigmatism of the optical power error.

Said deviation is the difference of the optical power in each discrete x,y,z position of each digital twin out of the iterated set of n' digital twins and the ordered power, preferably optical power digital twin out of the iterated set of n' digital twins minus ordered power.

An "iterated set of n' optical power error differences" comprises in respective discrete x,y,z positions a difference between each optical power error out of the iterated set of n' optical power errors and the optical power error of the predefined digital twin of the spectacle lens. The optical power error difference preferably comprises at least one selected from the group consisting of

(i) the optical mean power of the optical power error difference,
(ii) the optical astigmatism of the optical power error difference,
(iii) the axis of said optical astigmatism of the optical power error difference.

An "iterated intermediate digital twin of the spectacle lens" is a mathematical description of a front surface for said spectacle lens, a mathematical description of a back surface for said spectacle lens, and a mathematical description of a refractive index distribution of an optical material for said spectacle lens, whereby the mathematical description of either the front surface or the back surface is the same mathematical description as in the compensated digital twin of the spectacle lens which in turn is the same mathematical description as in the predefined digital twin of the spectacle lens, the same mathematical description being for a respective surface for said spectacle lens. The iterated intermediate digital twin of the spectacle lens is for the purpose of a use for a manufacture of the spectacle lens. The mathematical descriptions include an orientation of the front surface to the back surface. Therefore, preferably, either the front surface and the back surface are described in a same coordinate system or a transformation between a coordinate system of the front surface to a coordinate system of the back surface, or vice versa, is known. The mathematical descriptions preferably are closed mathematical descriptions. The mathematical description of either the front surface or the back surface not being the same mathematical description of the respective surface of the compensated digital twin or the predefined digital twin, the mathematical description of the respective surface being for said spectacle lens, preferably results from an optimization towards an iterated set of n' optical targets where each optical target of the iterated set of n' optical targets is, for each digital twin of the iterated set of n' digital twins, either an optical power of each digital twin of said spectacle lens out of the iterated set of n' digital twins in each predefined discrete x,y,z position or an optical power error of each digital twin of said spectacle lens out of the iterated set of n' digital twins in each predefined discrete x,y,z position. The iterated intermediate digital twin of the spectacle lens is having one surface, i.e., either the front surface or the back surface, identical to a respective surface of the compensated digital twin, said one surface in turn being identical to a respective surface of the predefined digital twin. The iterated intermediate digital twin is having a respective other surface, i.e., either the back surface or the front surface, that preferably results from an optimization towards an iterated set of n' optical targets where each optical target of the iterated set of n' optical targets is, for each digital twin of said iterated set of n' digital twins, either an optical power of each digital twin of said spectacle lens out of said iterated set of n' digital twins in each predefined discrete x,y,z position or an optical power error of each digital twin of said spectacle lens out of said iterated set of n' digital twins in each predefined discrete x,y,z position.

The creation of the iterated compensated surface of the iterated compensated digital twin of the spectacle lens or any further iterated compensated surface of any further iterated compensated digital twin preferably is terminated when the optical power or the optical power error of the iterated set of n' digital twins is substantially same as the optical power or the optical power error of the set of n predictive digital twins in each respective predefined x,y,z position. As a measure for substantially the same, a root mean square power error of the optical power error difference is used. The root mean square power error of the optical power error difference is defined as a square root of a sum of squares of the optical mean power of the optical power error difference and half of the optical astigmatism of the optical power error difference, according to

$$\sqrt{optical\ mean\ power^2 + \frac{optical\ astigmatism^2}{4}}$$

In case the correction surface of the set of n digital twins is determined

- by the optimization towards the set of n surface targets according to alternative a) of claim 1, the iterated correction surface of the iterated set of n digital twins preferably is determined by the optimization towards the iterated set of n' surface targets described in alternative c) above,
- by the subtraction of each discrete z position according to alternative b1) of claim 1, the iterated correction surface of the iterated set of n' digital twins preferably is determined by the subtraction of each discrete z position described in alternative d1) above,
- by the subtraction of the mathematical description according to alternative b2) of claim 1, the iterated correction surface of the set of n' digital twins preferably is determined by the subtraction of the mathematical description described in alternative d2) above.

For n' equals one, the iterated set of n' digital twins of the spectacle lens contains one digital twin based on the compensated digital twin transferred once to physical reality, i.e., the compensated manufactured digital twin manufactured once. The iterated compensated surface of the iterated compensated digital twin of the spectacle lens then is based on said one digital twin as described before.

The method being configured for calculating by the computer the compensated digital twin of the spectacle lens for the purpose of the use of the compensated digital twin for the manufacture of the spectacle lens, said compensated digital twin being based on the predefined digital twin of the spectacle lens, the method preferably being further configured for manufacturing n spectacle lenses based on said compensated digital twin of the spectacle lens, preferably calculated according to the method described before, or the method preferably being further configured for manufacturing n' spectacle lenses based on said iterated compensated digital twin of the spectacle lens, preferably calculated according to the method described before.

The n spectacle lenses result from a transfer of the compensated digital twin of the spectacle lens to physical reality, by manufacturing the n spectacle lenses. The n' spectacle lenses result from a transfer of the iterated compensated digital twin of the spectacle lens to physical reality, by manufacturing the n' spectacle lenses.

The n or n' spectacle lenses preferably are either manufactured in a surfacing process or in a casting process.

The method being configured for calculating by the computer the compensated digital twin of the spectacle lens for the purpose of the use of the compensated digital twin for the manufacture of the spectacle lens, said compensated digital twin being based on the predefined digital twin of the spectacle lens, the method preferably being further configured for manufacturing casting surfaces of a mold based on said compensated digital twin or based on said iterated compensated digital twin.

The mold preferably is a mold ensemble comprising a front mold with a casting surface and a back mold with a casting surface. Based on the compensated digital twin of the spectacle lens preferably means that the casting surfaces of the mold are manufactured such as to release a respective spectacle lens whose optical power or optical power error in respective each predefined discrete x,y,z position the optical power of the optical power error of the predefined digital twin of the spectacle lens. Based on the iterated compensated digital twin of the spectacle lens preferably means that the casting surfaces of the mold are manufactured such as to release a respective spectacle lens whose optical power or optical power error in respective each predefined discrete x,y,z position the optical power of the optical power error of the compensated or predefined digital twin of the spectacle lens.

A computer being configured to perform the steps of the method described before.

A data processing system comprising a processor and a storage medium coupled to the processor, wherein the processor is adapted to perform the steps of the method described before based on a computer program stored on the storage medium.

A computer program comprising instructions which, when the program is executed by a computer, cause the computer to carry out the method described before.

The computer program may be stored on a non-transitory tangible computer-readable storage medium, the computer program comprising instructions which, when the program is executed by a computer, cause the computer to carry out the method described before.

A computer-readable storage medium having stored thereon the computer program described before.

The computer program may be stored on a non-transitory tangible computer-readable storage medium, the computer program comprising instructions which, when the program is executed by a computer, cause the computer to carry out the method described before.

A data signal carrying the computer program described before.

Figures:

**Figure 1:** Surface power and optical power of three digital twins of three spectacle lenses compared to optical power maps measured from the same three spectacle lenses the digital twins were created from.

**Figure 2:** Optical mean power and optical astigmatism for three digital twins of three spectacle lenses compared to cylinder and mean-power component of optical power maps measured from the same three spectacle lenses the digital twins were created from along a horizontal line of y=0 and - 25mm<x<25mm.

**Figure 3:** Predefined digital twin for the spectacle lens for ordered spherical power-5.75D.

**Figure 4:** Digital twin 1 for the spectacle lens for ordered spherical power -5.75D.

**Figure 5:** Digital twin 2 for the spectacle lens for ordered spherical power -5.75D.

**Figure 6:** Optical power error differences of digital twins 1 and 2 and correction surface of the set of two digital twins of the spectacle lens for ordered power -5.75D. The correction surface is determined using the optical power error differences as surface targets for optimization.

**Figure 7:** Compensated digital twin of the spectacle lens for ordered spherical power -5.75D based on the correction surface determined using a set of optical power error differences as surface targets for optimization.

**Figure 8:** Predefined digital twin for the spectacle lens for ordered spherical power-3.00 D and ordered cylindrical power -2.00 D.

**Figure 9:** Digital twin 1 for the spectacle lens for ordered spherical power -3.00 D and ordered cylindrical power-2.00 D.

**Figure 10:** Digital twin 2 for the spectacle lens for ordered spherical power -3.00 D and ordered cylindrical power-2.00 D.

**Figure 11:** Optical power error differences of digital twins 1 and 2 and correction surface of the set of two digital twins of the spectacle lens for ordered spherical power -3.00 D and ordered cylindrical power-2.00 D. The correction surface is determined using the optical power error differences as surface targets for optimization.

**Figure 12:** Compensated digital twin of the spectacle lens for ordered spherical power-3.00 D and ordered cylindrical power -2.00 D based on the correction surface determined using a set of optical power error differences as surface targets for optimization.

**Figure 13:** Intermediate digital twin of digital twin 1 for the spectacle lens with ordered spherical power -5.75 as shown in Figure 4.

**Figure 14:** Compensated digital twin for the spectacle lens of ordered spherical power-5.75D calculated via an intermediate digital twin optimized towards an optical target.

**Figure 15:** Surface and optical mean powers of a group of predefined digital twins sharing one back surface.

**Figure 16:** Surface and optical mean powers of four sets of two digital twins created from measurements of spectacle lenses manufactured from the group of predefined digital twins shown in Figure 15.

**Figure 17:** Optical mean power of optical power error differences of the digital twins shown in Figure 16 with respect to the predefined digital twins shown in Figure 15 and surface mean power of the correction surface.

**Figure 18:** Predictive digital twins created by adding the correction surface shown in Figure 17 to the back surfaces of the digital twins shown in Figure 16.

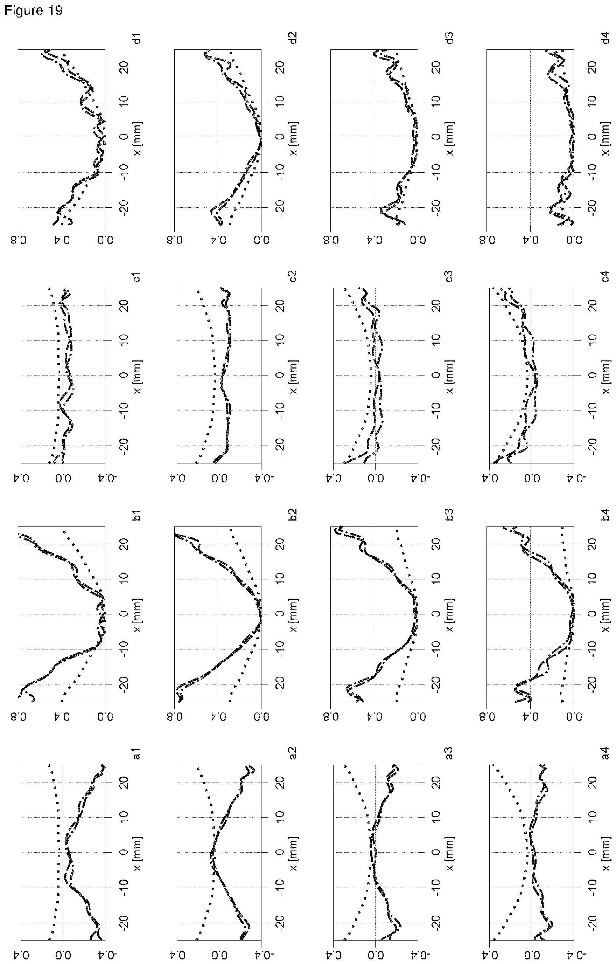

**Figure 19:** Optical mean power errors for the group of four sets of two digital twins and the group of four sets of two predictive digital twins compared to the group of predictive digital twins.

Examples for a compensated digital twin resulting from a correction surface determined by an optimization towards a set of n surface targets using a set of n optical power error differences as the set of n surface targets for optimization:

**Example 1:** Compensated digital twin for a predefined digital twin for ordered spherical power -5.75D

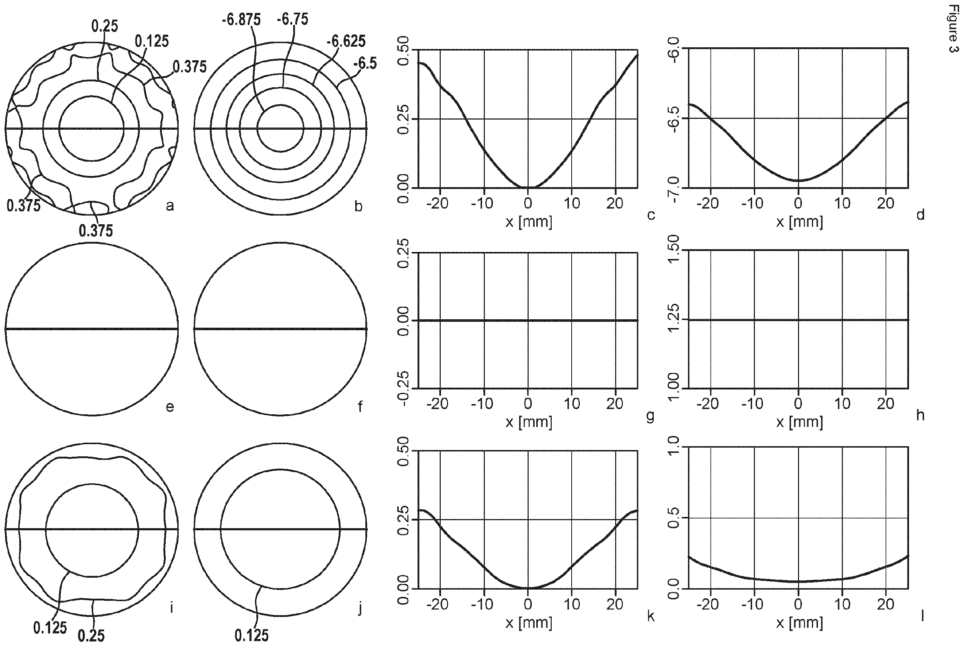

This example looks at the predefined digital twin of a spectacle lens for ordered spherical power -5.75D having a constant refractive index distribution, an optical centre and a lens thickness, i.e., distance between front and back surfaces, of 1.6mm at said optical centre. Figure 3 shows the surface cylindrical power (a, c) and the surface mean power (b, d) of the aspherical back surface, the surface cylindrical power (e, g) and the surface mean power (f, h) of the spherical front surface and the optical power error of the predefined digital twin (i to l) calculated for an object-distance model of a constant distance of 10m to the front surface of the lens at each x,y position, an as-worn position comprising a vertex distance of 12mm, a primary direction straight ahead, an as-worn pantoscopic angle of 0° and an as-worn face-form angle of 0° and an eye model comprising a centre of rotation of an eye at a distance of 14.65mm to the apex of the cornea of the eye in form of the optical mean power of the optical power error (i, k) and the optical astigmatism of the optical power error (j, l). Figure 3, subfigures a, b, e, f, i and j show isoline plots of constant values for x,y positions within a radius of 25mm around the optical centre of the predefined digital twin and Figure 3, subfigures c, d, g, h, k and l show values along the line y = 0 and -25mm < x < 25mm in diopters.

Two digital twins of the spectacle lens have been created from two physical spectacle lenses manufactured based on the predefined digital twin of the spectacle lens for ordered spherical power -5.75D. The lens thickness at the respective optical centre of the two digital twins is 1.55mm for the first digital twin and 1.53mm for the second digital twin. The orientation of the front surface and the back surface of the respective digital twin is the same as that of the respective spectacle lens the respective digital twin is created from.

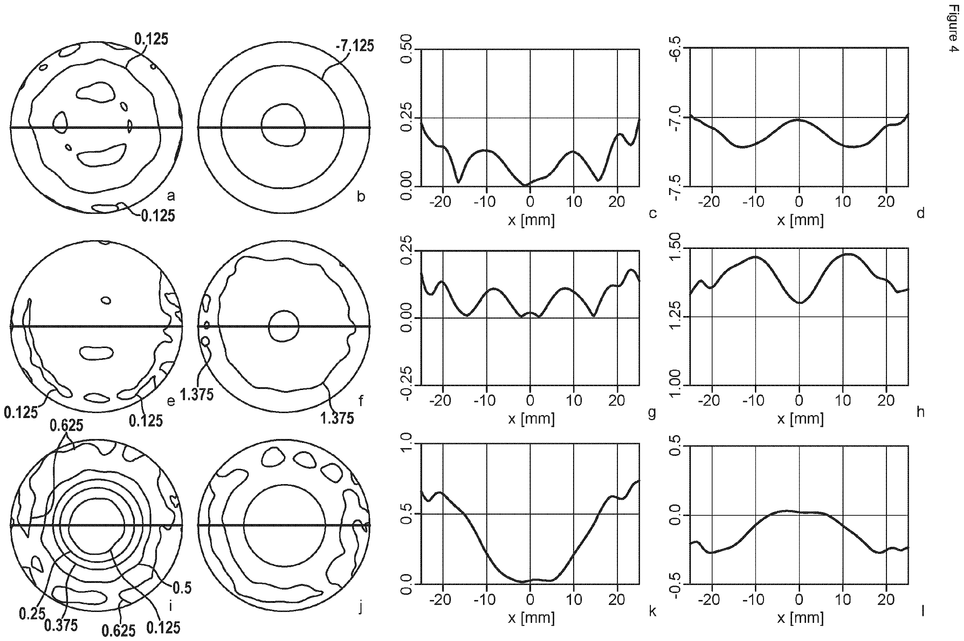

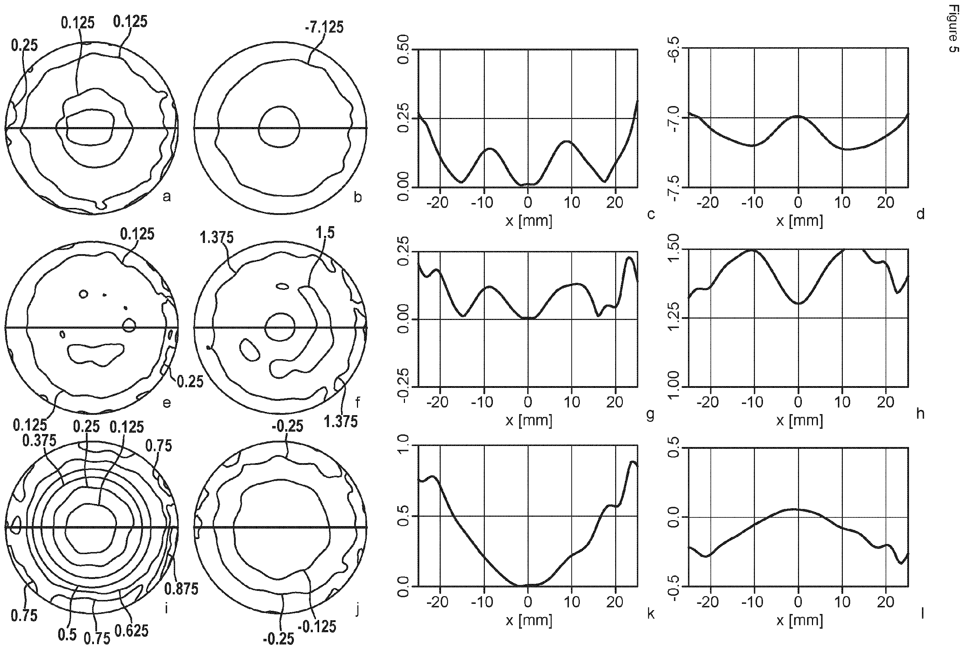

Figure 4 and Figure 5 show the surface powers and the optical power errors for these two respective digital twins as explained for the respective data for the predefined digital twin shown in Figure 3; the optical power errors have been calculated for the same object-distance model, as-worn position and eye model as described with respect to Figure 3 and assuming the same constant refractive index distribution as for the predefined digital twin.

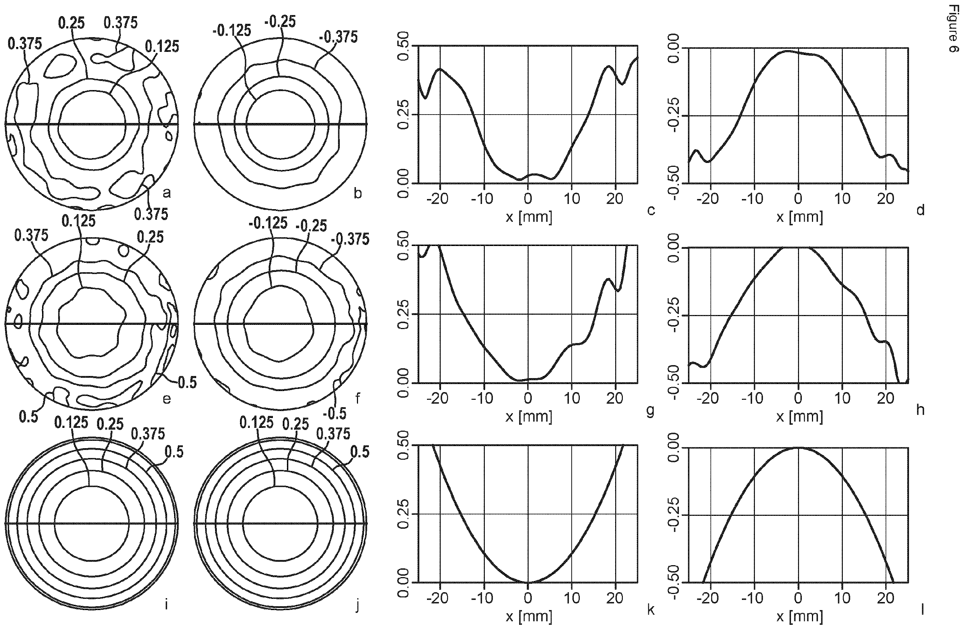

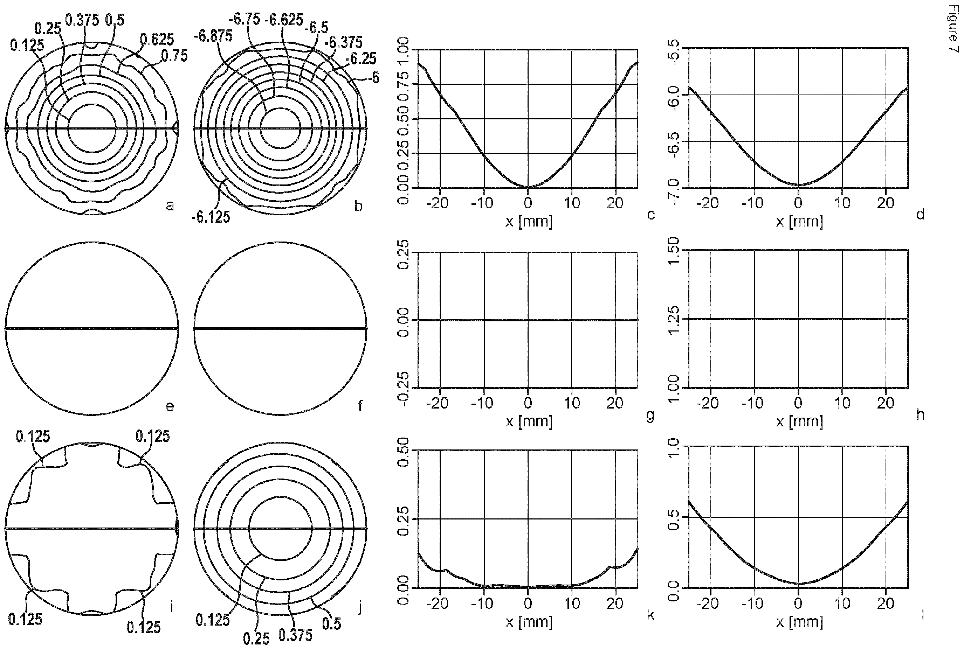

Figure 6 shows the optical astigmatism (a, c) and optical mean power (b, d) of the optical power error difference of digital twin 1, the optical astigmatism (e, g) and the optical mean power (f, h) of the optical power error difference of digital twin 2 and the surface mean power (i, k) and the surface cylindrical power (j, l) of the correction surface of this set of two digital twins determined from an optimization towards a set of two surface targets using the set of two optical power error differences of the two digital twins as targets for optimization. Figure 7 shows the compensated digital twin based on the predefined digital twin of the spectacle lens and the correction surface of the set of two digital twins of the spectacle lens. The front surface of this compensated digital twin is the same as the front surface of the predefined digital twin of Figure 3, subfigures e-h. The back surface of this compensated digital twin is resulting from an addition of the surface heights z of the correction surface of the set of two digital twins of Figure 6 i to l to the surface heights z of the back surface of the predefined digital twin of Figure 3, subfigures a to d in each x,y position. This compensated digital twin has the same lens thickness at the optical centre as the predefined digital twin and the orientation of the front surface and the back surface of this compensated digital twin with respect to each other is the same as the orientation of the front surface and the back surface of the predefined digital twin with respect to each other. Figure 7, subfigures i to l shows the optical power error for this compensated digital twin which is different from the optical power error of the predefined digital twin of Figure 3, subfigures i to l.

**Example 2:** Compensated digital twin for a predefined digital twin for ordered spherical power -3.00 D and ordered cylindrical power-2.00 D

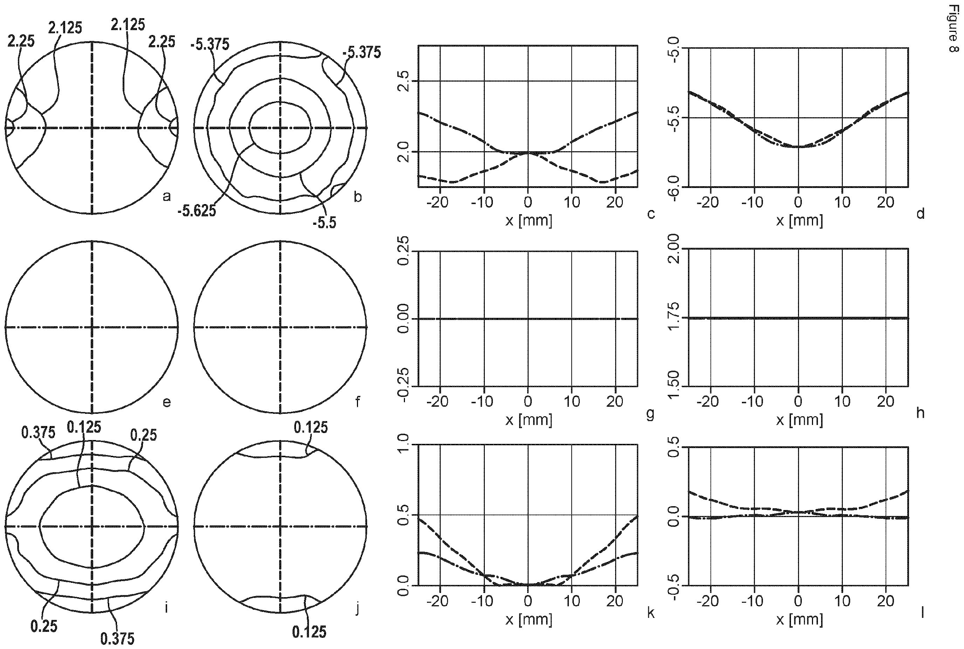

This example looks at the predefined digital twin of a spectacle lens for ordered spherical power -3.00D and ordered cylindrical power of -2.00 D having a constant refractive index distribution, an optical centre and a lens thickness, i.e. distance between front and back surfaces, of 1.44mm at said optical centre. Figure 8 shows the surface cylindrical power (a, c) and the surface mean power (b,d) of the atorical back surface, the surface cylindrical power (e, g) and the surface mean power (f, h) of the spherical front surface and the optical power error (i to l) of the predefined digital twin calculated for an object-distance model of a constant distance of 10m to the front surface of the lens at each x,y position, an as-worn position comprising a vertex distance of 12mm, a primary direction straight ahead, an as-worn pantoscopic angle of 0° and an as-worn face-form angle of 0° and an eye model comprising a centre of rotation of an eye at a distance of 14.3mm to the apex of the cornea of the eye, in form of the optical mean power error (i, k) and the optical astigmatism (j, l) of the optical power error. Figure 8, subfigures a, b, e, f, i and j show isoline plots of constant values for x,y positions within a radius of 25mm around the optical centre of the predefined digital twin and Figure 8, subfigures c, d, g, h, k and l show values along the line y = 0 and -25mm < x < 25mm (dot-dashed line) and values along the line x = 0 and -25mm < y < 25mm (dashed line) in diopters. Two digital twins of this spectacle lens have been created from two physical spectacle lenses manufactured based on the predefined digital twin of the spectacle lens for ordered spherical power -3.00 D and ordered cylindrical power -2.00 D. The lens thickness at the respective optical centre of the two digital twins is 1.63mm for the first digital twin and 1.44mm for the second digital twin. The orientation of the front surface and the back surface of the respective digital twin is the same as that of the respective spectacle lens the respective digital twin is created from.

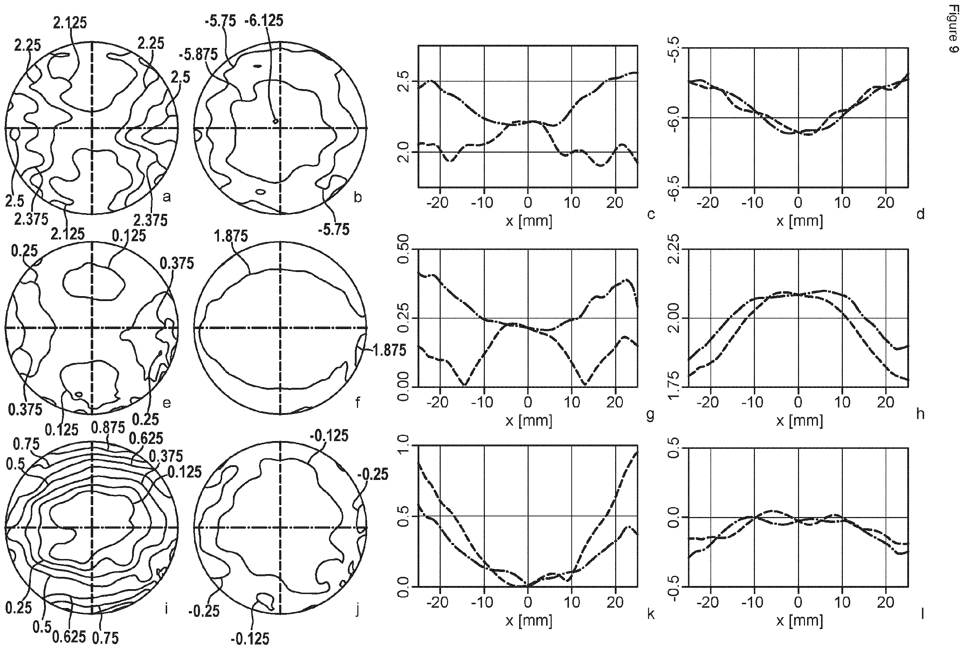

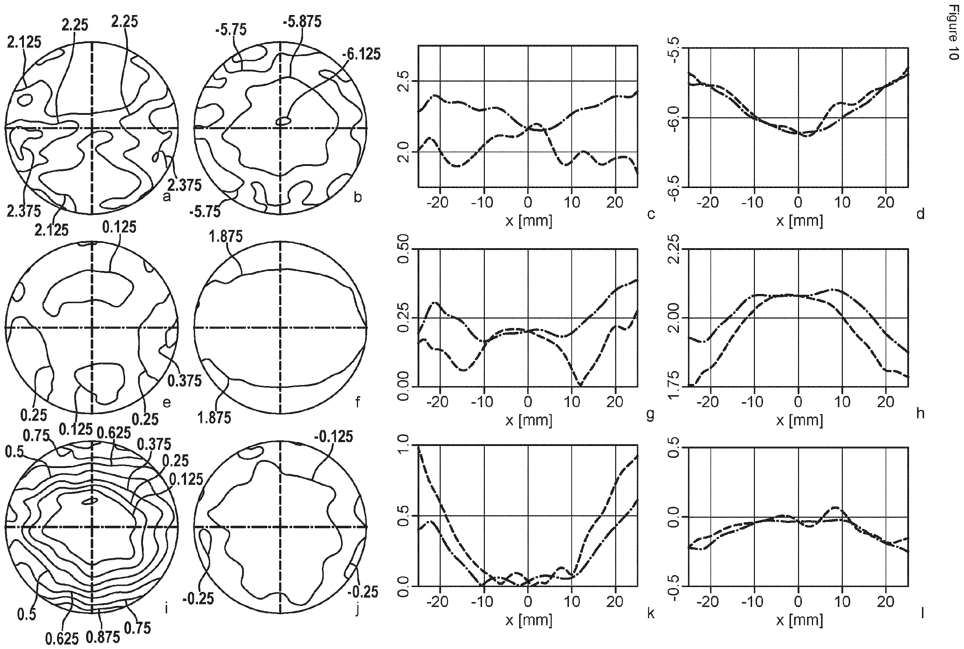

Figure 9 and Figure 10 show the surface powers and the optical power errors for these two respective digital twins as explained for the respective data for the predefined digital twin shown in Figure 8; the optical power errors have been calculated for the same object-distance model, as-worn position and eye model as described with respect to Figure 8 and assuming the same constant refractive index distribution as for the predefined digital twin.

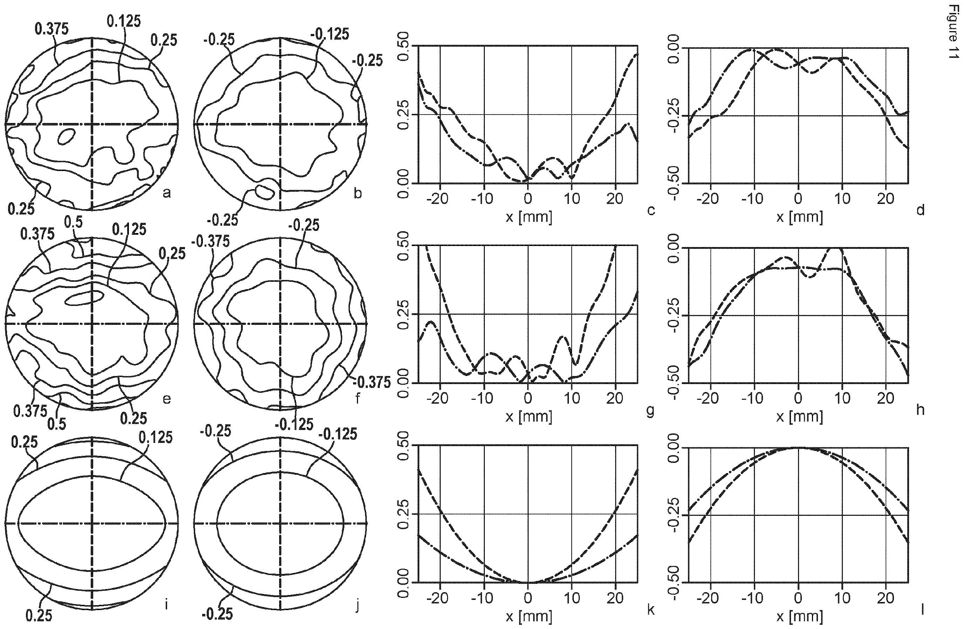

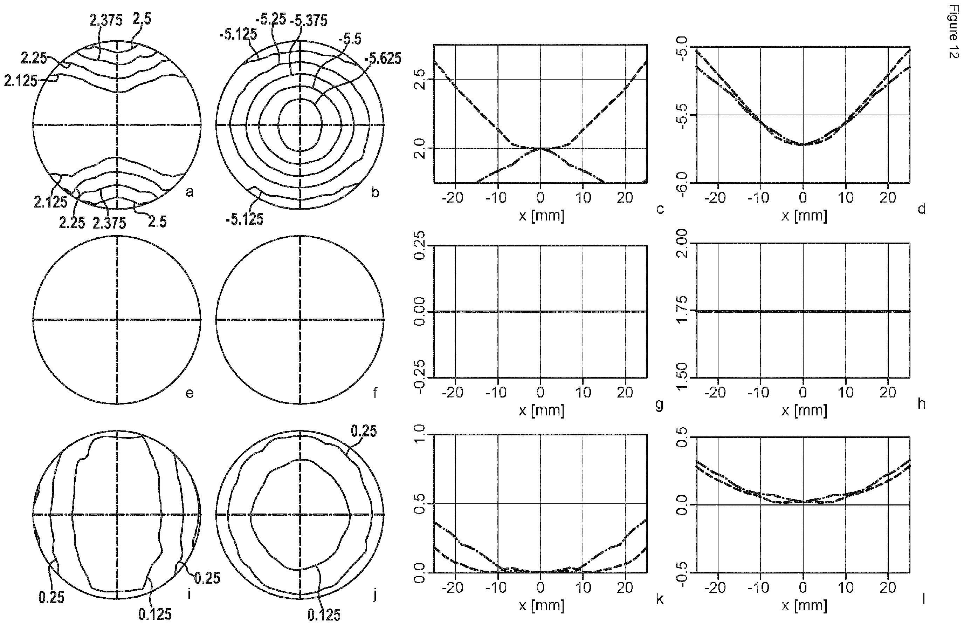

Figure 11 shows the optical astigmatism (a, c) and optical mean power (b, d) of the optical power error difference of digital twin 1, the optical astigmatism (e, g) and the optical mean power (f, h) of the optical power error difference of digital twin 2 and the surface mean power (i, k) and the surface cylindrical power (j, l) of the correction surface of this set of two digital twins determined from an optimization towards a set of two surface targets using the set of two optical power error differences of the two digital twins as targets for optimization. Figure 12 shows the compensated digital twin based on the predefined digital twin of the spectacle lens and the correction surface of the set of two digital twins of the spectacle lens for this spectacle lens with ordered mean power -3.00D and ordered cylindrical power of -2.00D. The front surface of this compensated digital twin is the same as the front surface of the predefined digital twin of Figure 8, subfigures e-h. The back surface of this compensated digital twin is resulting from an addition of the surface heights z of the correction surface of the set of two digital twins of Figure 11, subfigures i to l to the surface heights z of the back surface of the predefined digital twin of Figure 8, subfigures a to d in each x,y position. This compensated digital twin has the same lens thickness at the optical centre as the predefined digital twin and the orientation of the front surface and the back surface of this compensated digital twin with respect to each other is the same as the orientation of the front surface and the back surface of the predefined digital twin with respect to each other. Figure 12, subfigures i to l show the optical power error for this resulting compensated digital twin which is different from the optical power error of the predefined digital twin of Figure 8, subfigures i to l.

**Example 3:** Example for a compensated digital twin resulting from a correction surface determined by optimization of an intermediate digital twin.

This example looks again at the predefined digital twin of a spectacle lens for ordered spherical power -5.75D having a constant refractive index distribution, an optical centre and a lens thickness, i.e., distance between front and back surfaces, of 1.6mm at said optical centre. Figure 3 shows the surface cylindrical power (a, c) and the surface mean power (b,d) of the aspherical back surface, the surface cylindrical power (e, g) and the surface mean power (f, h) of the spherical front surface and the optical power error of the predefined digital twin (i to l) calculated for an object-distance model of a constant distance of 10m to the front surface of the lens at each x,y position, an as-worn position comprising a vertex distance of 12mm, a primary direction straight ahead, an as-worn pantoscopic angle of 0° and an as-worn face-form angle of 0° and an eye model comprising a centre of rotation of an eye at a distance to a cornea of 14.65mm to the apex of the cornea of the eye in form of the optical mean power of the optical power error (i, k) and the optical astigmatism of the optical power error (j, l). Figure 3, subfigures a, b, e, f, i and j show isoline plots of constant values for x,y positions within a radius of 25mm around the optical centre of the predefined digital twin and Figure 3, subfigures c, d, g, h, k and l show values along the line y = 0 and -25mm < x < 25mm in diopters. Figure 4 shows the surface powers and the optical power error for a digital twin created from a physical spectacle lenses manufactured from the predefined digital twin of the spectacle lens for ordered spherical power-5.75D. Figure 4 shows the data for this digital twin as explained for the respective data for the predefined digital twin shown in Figure 3; the optical power errors have been calculated for the same object-distance model, as-worn position and eye model as described with respect to Figure 3 and assuming the same constant refractive index distribution as for the predefined digital twin.

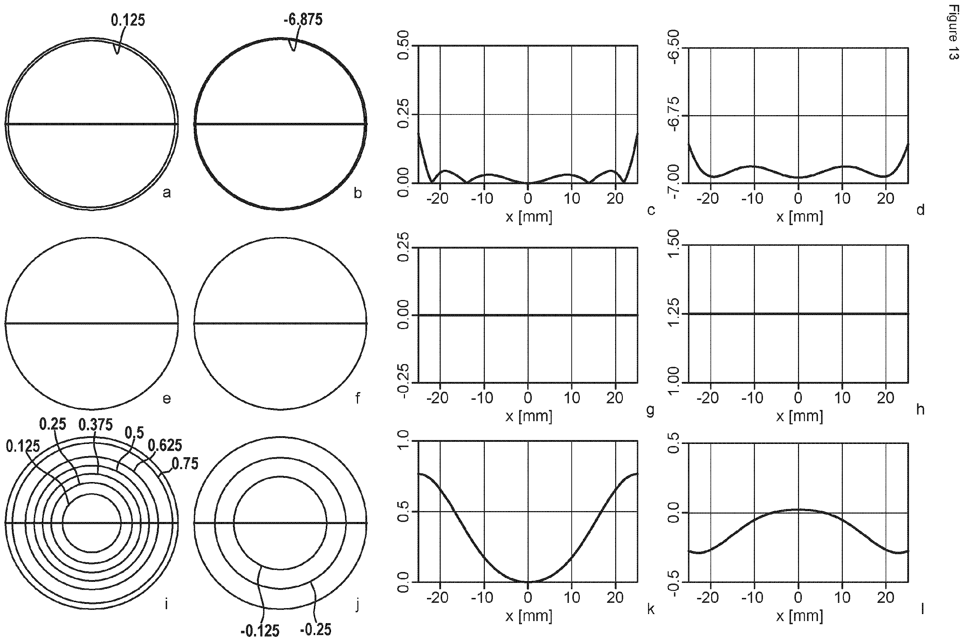

Figure 13 shows the surface powers (a-h) and optical power error (i-l) of an intermediate digital twin of the spectacle lens of ordered spherical power-5.75D. The front surface of this intermediate digital twin (surface power shown in Figure 13, subfigures e-h) is the same as the front surface of the predefined digital twin for the same spectacle lens (surface power shown in Figure 3, subfigures e-h). The back surface of the intermediate digital twin is the result of the optimization of the parameters of an aspherical surface as a back surface of the intermediate digital twin towards the optical power error of the digital twin as shown in Figure 4, subfigures i to l. The surface power of the back surface of the intermediate digital twin resulting from this optimization is shown in figure 13, subfigures a to d; where a and c show the isoline plot and values along the line y = 0, -25mm < x < 25mm for the surface cylindrical power and b and d show the isoline plot and values along the line y = 0, -25mm < x < 25mm for the surface mean power of the back surface of the intermediate digital twin. In other words, the parameters of the aspherical back surface of the intermediate digital twin are calculated such that, when combining this aspherical back surface with the spherical front surface of the predefined digital twin, keeping the lens thickness at the optical centre and the orientation of the front surface and the back surface with respect to each other the same as that of the predefined digital twin, the resulting intermediate digital twin reproduces the optical power error of the digital twin (Figure 4, subfigures i-l) as good as possible, where the optical power error of the intermediate digital twin (Figure 13, subfigures i-l) is calculated for the same object-distance model, as-worn position and eye model as described for the predefined digital twin of Figure 3 and assuming the same constant refractive index distribution as for the predefined digital twin.

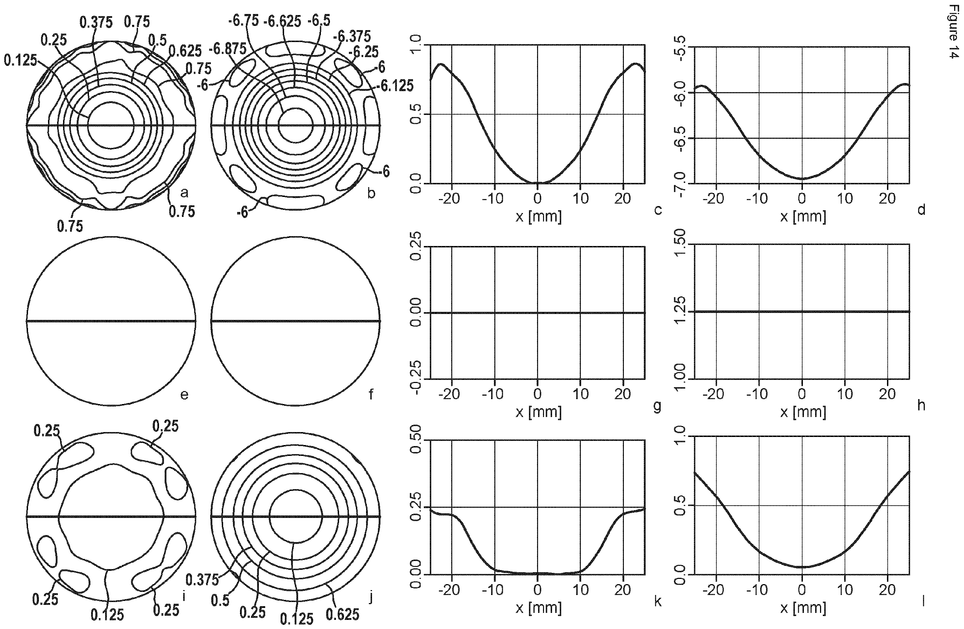

Figure 14 shows the surface powers (a-h) and optical power error (i-l) for the compensated digital twin determined via the intermediate digital twin of Figure 13. The front surface of this compensated digital twin is the same as the front surface of the predefined digital twin of Figure 3, subfigures e-h. The back surface of this compensated digital twin is resulting from an addition of the surface heights z of a correction surface of the digital twin to the surface heights z of the back surface of the predefined digital twin of Figure 8 a to d in each x,y position, where the correction surface is a subtraction of surface heights z of the optimized back surface of the intermediate digital twin from the back surface of the predefined digital twin in each x,y position. The lens thickness at the optical centre and the orientation of the front surface and the back surface with respect to each other of this compensated digital twin is the same as that of the predefined digital twin. The surface powers of the resulting compensated surface can be seen in Figure 14, a to d. Figure 14 i to l shows the optical power error of this compensated digital twin, where the optical power error of the intermediate digital twin (Figure 13, subfigures i-l) is calculated for the same object-distance model, as-worn position and eye model as described for the predefined digital twin of figure 3 and assuming the same constant refractive index distribution as for the predefined digital twin. The optical power error of this compensated digital twin is different from the optical power error of the predefined digital twin of Figure 3 i to l.

**Example 4:** Example for a set of predictive digital twins for a group of predefined digital twins.

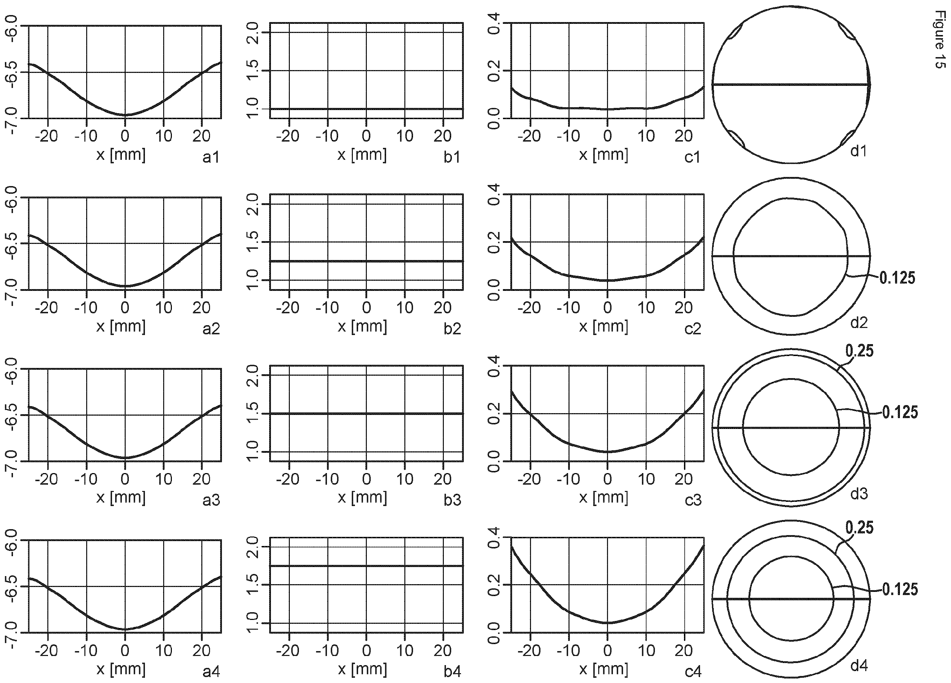

Figure 15 shows surface mean powers and optical mean powers of the optical power errors for a group of predefined digital twins. The respective predefined digital twins of this group of predefined digital twins share the same back surface and differ in the curvature of their respective spherical front surfaces and all have a constant refractive index distribution, an optical centre and a lens thickness, i.e. distance between front and back surfaces, of 1.6mm at said optical centre. Figure 15, subfigures a1 to d1 show the mean power values for the first member of the group of predefined digital twins, a predefined digital twin for ordered spherical power -6.00 D. Figure 15, subfigures a2 to d2 shows the corresponding data for a predefined digital twin for ordered spherical power -5.75D, Figure 15, subfigures a3 to d3 shows the corresponding data for a predefined digital twin for ordered spherical power -5.50D and Figure 15, subfigures a4 to d4 shows the corresponding data for a predefined digital twin for ordered spherical power -5.25D, the second, third and fourth member of the group of predefined digital twins, respectively.

Values of the surface mean power of the back surfaces of the group of predefined digital twins along the line y=0, -25mm < x < 25mm are shown in Figure 15, subfigures a1 to a4. Since the group of predefined twins share the same back surface, the curves shown in Figure 15, subfigures a1 to a4 are identical.

Values of the surface mean power of the front surfaces of the group of predefined digital twins along the line y=0, -25mm < x < 25mm are shown in Figure 15, subfigures b1 to b4. Since each of the respective predefined digital twins of the group of predefined digital twins has a different spherical front surface, four different constant curves are shown in Figure 15, subfigures b1 to b4.

Values of the optical mean power of the optical power error of the respective predefined digital twins of the group of predefined digital twins are shown in Figure 15, subfigures c1 to c4 along the line y=0, - 25mm < x < 25mm and in Figure 15, subfigures d1 to d4 for x,y within a circle of radius 25mm around the respective optical axis in form of isoline plots, each calculated for the same object-distance model of a constant distance of 10m to the front surface at each x, y position, the same as-worn positions comprising a vertex distance of 12mm, a primary direction straight ahead, an as-worn pantoscopic angle of 0° and an as-worn face-form angle of 0° and different eye models corresponding to the different ordered spherical powers, each comprising a centre of rotation at a distance of 14.7mm (c1 and d1), 14.65mm (c2 and d2), 14.6mm (c3 and d3) and 14.55mm (c4 and d4) to the apex of the cornea, respectively.

For each of the members of the group of predefined digital twins, two spectacle lenses have been manufactured and measured to create a set of two digital twins for each of the members of the group of predefined digital twins. The lens thickness at the respective optical centre of the two digital twins of the first member of the group of predefined digital twins is 1.55mm for the first digital twin and 1.52mm for the second digital twin. The lens thickness at the respective optical centre of the two digital twins of the second, third and fourth member of the group of predefined digital twins is 1.55mm, 1.52mm and 1.56mm for the respective first digital twin and 1.53mm, 1.43mm and 1.56mm for the respective second digital twin. The orientation of the front surface and the back surface of the respective digital twin is the same as that of the respective spectacle lens the respective digital twin is created from.

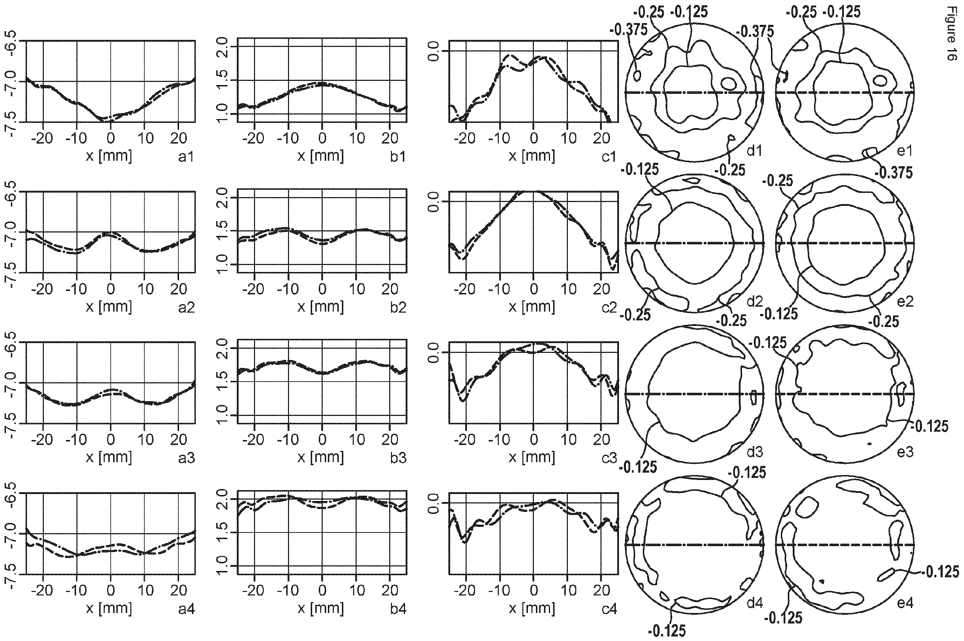

Figure 16, subfigures a1 to e1 shows data for the set of digital twins corresponding to the first predefined digital twin of the group of digital twins, Figure 16, subfigures a2 to e2 shows data for the set of digital twins corresponding to the second predefined digital twin of the group of digital twins,

Figure 16, subfigures a3 to e3 shows data for the set of digital twins corresponding to the third predefined digital twin of the group of digital twins and Figure 16, subfigures a4 to e4 shows data for the set of digital twins corresponding to the fourth predefined digital twin of the group of digital twins.

For each set of two digital twins corresponding to the same member of the group of digital twins, the values of surface mean power and optical mean power of the optical power error along the line y=0, - 25mm < x < 25mm are shown as a dash-dotted line for the first respective digital twin and as a dashed line for the second respective digital twin.

Figure 16, subfigures a1 to a4 show values of the surface mean power along the line y=0, -25mm < x < 25mm of the respective back surfaces of the four sets of two digital twins corresponding to each member of the group of predefined digital twins. As can be seen, the back surfaces of the respective set of digital twins differ from the back surface of the corresponding predefined digital twins, but the difference between the two digital twins of each set of digital twins is small.

Figure 16, subfigures b1 to b4 show values of the surface mean power along the line y=0, -25mm < x < 25mm of the respective front surfaces of the four sets of two digital twins corresponding to each member of the group of predefined digital twins. As can be seen, the front surfaces of the respective set of digital twins differ from the front surface of the corresponding predefined digital twin, but the difference between the two digital twins of each set of digital twins is small.

Values of the optical mean power of the optical power error of the four sets of two digital twins corresponding to each member of the group of predefined digital twins are shown in Figure 16, subfigures c1 to c4 along the line y=0, -25mm < x < 25mm and in Figure 16, subfigures d1 to d4 and e1 to e4 for x,y within a circle of radius 25mm around the respective optical axis in form of isoline plots, each calculated for the same object-distance model, the same as-worn position and the same eye model corresponding to the different ordered spherical powers as the mean power error of the corresponding digital twin shown in Figure 15 and assuming the same constant refractive index distribution as for the predefined digital twin. Figure 16, subfigures d1 to d4 show the isoline plots of the optical mean power of the optical power error of the first respective digital twin and Figure 16, subfigures e1 to e4 show the isoline plots of the second respective digital twin of each of the four sets of two digital twins. As can be seen, the optical power errors of the respective digital twins of each set differ from the optical power errors of the corresponding predefined digital twin but the difference between the optical power errors of the same set of digital twins is small.

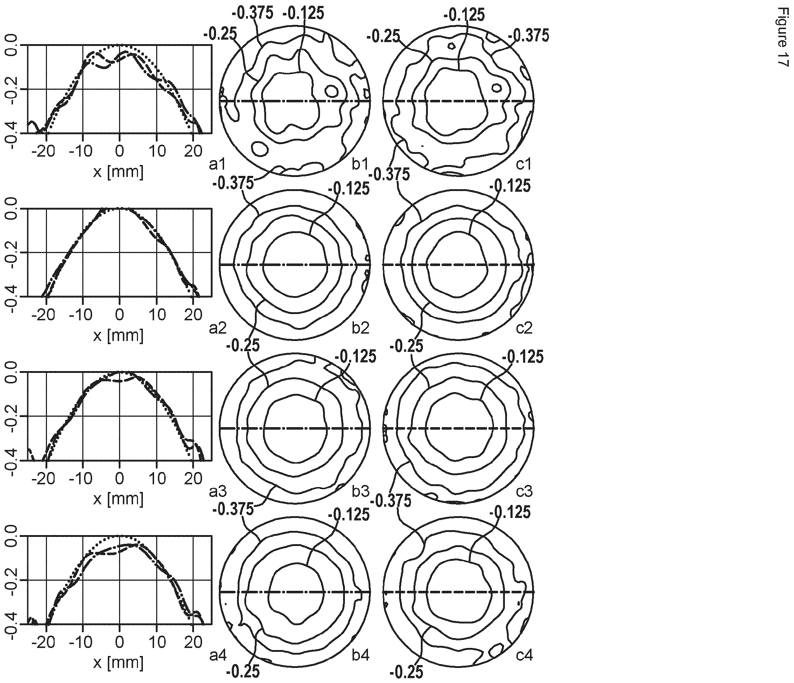

A correction surface for the group of predefined digital twins is calculated by optimizing a surface using the set of eight optical power error differences as surface targets for optimization. Figure 17 shows the optical mean power of the optical power error difference for each digital twin of the four sets of two digital twins corresponding to the respective members of the group of four predefined digital twins together with the surface mean power of the correction surface determined by the optimization.

Figure 17, subfigures b1 and c1 shows the optical mean power of the optical power error differences of the set of two digital twins corresponding to the first predefined digital twin of the group of digital twins in form of isoline plots for x,y positions inside a circle with radius 25mm around the optical centre; Figure 17, subfigure a1 shows the values of the optical mean power of the optical power error differences for both digital twins of the set of digital twins corresponding to the first predefined digital twin of the group of predefined digital twins (dash-dotted and dashed line) together with the values of mean surface power of the correction surface of the group of predefined digital twins (dotted line) along the line y=0 and -25mm < x < 25mm.

Figure 17, subfigures a2 to c2 show the same data as described above with respect to Figure 17, subfigures a1 to c1 for the set of two digital twins corresponding to the second member of the group of predefined digital twins.

Figure 17, subfigures a3 to c3 show the same data as described above with respect to Figure 17, subfigures a1 to c1 for the set of two digital twins corresponding to the third member of the group of predefined digital twins.

Figure 17, subfigures a4 to c4 show the same data as described above with respect to Figure 17, subfigures a1 to c1 for the set of two digital twins corresponding to the fourth member of the group of predefined digital twins.

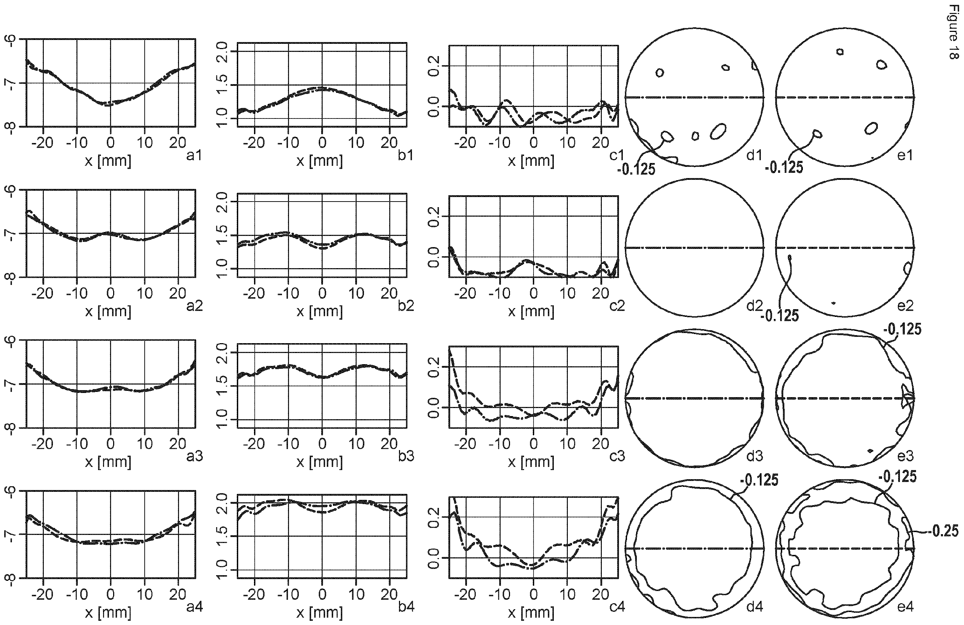

The correction surface of the group of four sets of two digital twins can be used to predict the optical performance (i.e. the optical power errors) of spectacle lenses manufactured based on a group of compensated digital twins when each member of the group of compensated digital twins is created by combining the respective front surface of the corresponding member of the group of predefined digital twins with a back surface that is a sum of the respective back surface of the corresponding member of the group of predefined digital twins and the correction surface, where sum is to be understood as summing z values at each x,y position of the respective surfaces, keeping the respective thickness at the respective optical centre and the orientation of the front surface and the back surface with respect to each other the same as that of the corresponding predefined digital twin. To predict the optical power errors of spectacle lenses manufactured based on the group of compensated digital twins, a group of four sets of two predictive digital twins is created. Each predictive digital twin is a combination of the front surface of the respective digital twin of the group of four sets of two digital twins with a back surface that is a sum of the back surface of the respective digital twin and the correction surface of the group of four sets of two digital twins, where sum is to be understood as summing z values at each x,y position of the respective surfaces, keeping the respective thickness at the respective optical centre and the orientation of the front surface and the back surface with respect to each other the same as that of the respective digital twin of the group of four sets of two digital twins. Figure 18 shows the surface mean powers and optical mean power of the optical power errors of the group of four sets of two predictive digital twins in the same format as described above for Figure 16 with respect to the data of the four sets of two digital twins. As can be seen, neither the back surfaces nor the front surfaces of the predictive digital twins are the same as the surfaces of the corresponding members of the group of predefined digital twins, but the optical mean power of the optical power error of each predictive digital twin is much closer to the optical mean power of the optical power error of the corresponding members of the group of predefined digital twins than had been the case for the group of four sets of two digital twins.

Figure 18 shows comparison plots of the optical power errors of the group of four sets of digital twins, the group of four sets of predictive digital twins and the group of predefined digital twins along the line y = 0 and -25mm < x < 25mm.
Figure 18, subfigures a1 to a4 shows values of the optical mean power of the optical power error of the respective sets of digital twins (dash-dotted and dashed line) and of the corresponding member of the group of predefined digital twins (dotted line).
Figure 18, subfigures b1 to b4 shows values of the optical astigmatism of the optical power error of the respective sets of digital twins (dash-dotted and dashed line) and of the corresponding member of the group of predefined digital twins (dotted line).
Figure 18, subfigures c1 to c4 shows values of the optical mean power of the optical power error of the respective sets of predictive digital twins (dash-dotted and dashed line) and of the corresponding member of the group of predefined digital twins (dotted line).
Figure 18, subfigures c1 to c4 shows values of the optical astigmatism of the optical power error of the respective sets of predictive digital twins (dash-dotted and dashed line) and of the corresponding member of the group of predefined digital twins (dotted line).
As can be seen in Figure 18, the optical power errors of the predictive digital twins are much closer to the optical power errors of the corresponding predefined digital twins than the optical power errors of the digital twins. Thus, it can be expected that spectacle lenses based on the group of compensated digital twins will deliver optical power much closer to the desired optical power than the spectacle lenses manufactured directly from the group of predefined digital twins without compensation.

**Claims**

1.     Method being configured for calculating by a computer a compensated digital twin of a spectacle lens for the purpose of a use of the compensated digital twin for a manufacture of the spectacle lens, said compensated digital twin being based on a predefined digital twin of a spectacle lens, the method is **characterized in** the step of:

- combining a compensated surface of said predefined digital twin of said spectacle lens with a respective other surface of said predefined digital twin resulting in said compensated digital twin,
said compensated surface of said predefined digital twin resulting from

(i) an addition of each discrete z position of a correction surface of a set of n digital twins of a spectacle lens, n ≥ 1, in each predefined discrete x,y position to a respective discrete z position of a respective surface of said predefined digital twin in a respective discrete x,y position, or
(ii) an addition of a mathematical description of a correction surface of a set of n digital twins of a spectacle lens, n ≥ 1, to a mathematical description of a respective surface of said predefined digital twin,

said correction surface of said set of n digital twins being determined by

a) an optimization towards a set of n surface targets using a set of n optical power error differences as the set of n surface targets for optimization, or
b1) a subtraction of each discrete z position of an optimized surface of an intermediate digital twin of a spectacle lens in each predefined discrete x,y position from a respective discrete z position of a respective surface of said predefined digital twin in a respective discrete x,y position, said optimized surface of said intermediate digital twin being calculated by using b1a) a set of n optical powers of said set of n digital twins in each predefined discrete x,y,z position or b1b) a set of n optical power errors of said set of n digital twins in each predefined discrete x,y,z position, each as a set of n optical targets for optimization of said intermediate digital twin, said intermediate digital twin having one surface identical to a respective surface of said predefined digital twin, or

b2) a subtraction of a mathematical description of an optimized surface of an intermediate digital twin of a spectacle lens from a mathematical description of a respective surface of said predefined digital twin, said optimized surface of said intermediate digital twin being calculated by using b2a) a set of n optical powers of said set of n digital twins in each predefined discrete x,y,z position or b2b) a set of n optical power errors of said set of n digital twins in each predefined discrete x,y,z position each as a set of n optical targets for optimization of said intermediate digital twin, said intermediate digital twin having one surface identical to a respective surface of said predefined digital twin,

for each digital twin of said set of n digital twins, said optical power error difference being, in each predefined discrete x,y,z position, a difference between an optical power error of a respective digital twin and an optical power error of said predefined digital twin,

for each digital twin of said set of n digital twins, said optical power error of a respective digital twin being a deviation of an optical power of a respective digital twin from an ordered power in each predefined discrete x,y,z position of said predefined digital twin,

said optical power error of said predefined digital twin being a deviation of an optical power of said predefined digital twin from said ordered power in each predefined discrete x,y,z position of said predefined digital twin,

for each digital twin of said set of n digital twins, said optical power of a respective digital twin comprising, with respect to a predefined eye model, a predefined as-worn position and a predefined object-distance model, in each predefined discrete x,y,z position, an optical mean power, an optical astigmatism and an axis of said optical astigmatism,

said optical mean power being defined as an average between an optical minimum power and an optical maximum power in each predefined discrete x,y,z position,

said optical maximum power being defined as a reciprocal of a distance along a respective chief ray from a vertex surface to a point of minimum focal length in a plane T of minimum focal length, said chief ray passing through a respective predefined discrete x,y,z position, said respective predefined discrete x,y,z position determining a viewing direction of an eye of said predefined eye model,

said vertex surface being defined as a set of x,y,z positions, determined by surface points of an apex surface representing locations of an apex of a cornea when an eye rotates, and a fixed distance which is added to the apex surface at respective surface points in a direction that corresponds to the viewing direction of the eye when the apex of the cornea is located at a respective surface point, where the fixed distance is a vertex distance defined analogously as in ISO 13666:2019(E), entry 3.2.40,

said optical minimum power being defined as a reciprocal of a distance along said respective chief ray from said vertex surface to a maximum focal point in a plane S of maximum focal length, said plane S of maximum focal length being perpendicular to said plane T of minimum focal length,

said optical astigmatism being defined as a difference between said optical maximum power and said optical minimum power of a respective digital twin in each predefined discrete x,y,z position, and said axis of said optical astigmatism being defined in a plane comprising said point of minimum focal length, said plane being perpendicular to said respective chief ray, said axis being defined as an angle between an intersection line of an x,z plane with said plane and an intersection line of said plane T of minimum focal length with said plane,

said optical power of said predefined digital twin comprising, with respect to said predefined eye model, said predefined as-worn position and said predefined object-distance model, in each predefined discrete x,y,z position, an optical mean power, an optical astigmatism and an axis of said optical astigmatism,

said ordered power of said predefined digital twin comprising at least an ordered spherical power, for each digital twin of said set of n digital twins, said ordered power of each digital twin comprising at least said ordered spherical power.

2. Method according to claim 1, **characterized in that** in said set of n digital twins n equals one.

3. Method according to any one of preceding claims, **characterized in that** for determining the correction surface of said set of n digital twins according to a) a parametric mathematical description of said correction surface is created, and parameter values of said parametric mathematical description are determined by the optimization.

4. Method according to any one of preceding claims 1 and 2, **characterized in that** for determining the correction surface of said set of n digital twins according to b1) or b2) a parametric mathematical description of said optimized surface of said intermediate digital twin is created, and parameter values of said parametric mathematical description are determined by an optimization towards the set of n optical targets for optimization.

5. Method according to any one of preceding claims 3 and 4, **characterized in that** said parametric mathematical description is a parametric mathematical description of an aspherical surface as defined in ISO 13666:2019(E), entry 3.4.3 or an atoroidal surface as defined in ISO13666:2019(E), entry 3.4.7.

6. Method according to any one of the preceding claims, **characterized in** the steps of

    - adding said correction surface to a surface of each digital twin of said set of n digital twins, and
    - combining said surface of each digital twin with a respective other surface of each respective digital twin resulting in a predictive digital twin of a spectacle lens of a set of n predictive digital twins of a spectacle lens.

7. Method according to any one of the preceding claims, **characterized in that** said correction surface is equal for a group of predefined digital twins.

8. Method according to any one of the preceding claims, **characterized in** the step of

    - combining an iterated compensated surface of said compensated digital twin with a respective other surface of said predefined digital twin resulting in an iterated compensated digital twin of the spectacle lens.

9. Method according any one of the preceding claims being further configured for manufacturing n spectacle lenses, when dependent on claims 1 to 7, based on said compensated digital twin, being further configured for manufacturing n' spectacle lenses, when dependent on claim 8, based on said iterated compensated digital twin.

10. Method according to any one of the preceding claims being further configured for manufacturing casting surfaces of a mold, when dependent on claims 1 to 7 based on said compensated digital twin, when dependent on claim 8, said iterated compensated digital twin.

11. Computer being configured to perform the steps of the method according to any one of preceding claims 1 to 10.

12. Computer program comprising instructions which, when the program is executed by a computer, cause the computer to carry out the method according to any one of the preceding claims 1 to 10.

13. Computer-readable storage medium having stored thereon the computer program of claim 12.

14. Data signal carrying the computer program of claim 13.

Figure 1

EP 4 600 719 A1

Figure 1

Figure 1

Figure 2

optical astigmatism digital twin
power map cylinder component
optical mean power digital twin
power map mean-power component

Figure 3

Figure 4

Figure 5

Figure 6

Figure 7

Figure 8

Figure 9

Figure 10

Figure 11

Figure 12

Figure 13

Figure 14

Figure 15

Figure 16

Figure 17

Figure 18

Figure 19

Europäisches
Patentamt

European
Patent Office

Office européen
des brevets

## EUROPEAN SEARCH REPORT

Application Number

EP 24 15 6781

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/307223 A1 (GACOIN ERIC [FR] ET AL) 16 October 2014 (2014-10-16) * paragraph [0001] - paragraph [0069] * | 1-14 | INV. G02C7/02 |
| A | WO 2016/193771 A1 (ESSILOR INT [FR]) 8 December 2016 (2016-12-08) * paragraph [0001] - paragraph [0130] * | 1-14 | |
| A | US 2009/125137 A1 (ALLIONE PASCAL [FR] ET AL) 14 May 2009 (2009-05-14) * paragraph [0001] - paragraph [0162] * | 1-14 | |
| A | WO 2016/202480 A1 (ESSILOR INT [FR]) 22 December 2016 (2016-12-22) * page 1 - page 25 * | 1-14 | |

TECHNICAL FIELDS
SEARCHED     (IPC)

G02C

The present search report has been drawn up for all claims

| Place of search | Date of completion of the search | Examiner |
|---|---|---|
| Munich | 4 July 2024 | Albero Silvestre, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 6781

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2024

| Patent document cited in search report | | Publication date | Patent family member(s) | | Publication date |
|---|---|---|---|---|---|
| US 2014307223 | A1 | 16-10-2014 | AU | 2012350695 A1 | 05-06-2014 |
| | | | BR | 112014014360 A2 | 13-06-2017 |
| | | | CN | 103987492 A | 13-08-2014 |
| | | | EP | 2790876 A1 | 22-10-2014 |
| | | | ES | 2552182 T3 | 26-11-2015 |
| | | | FR | 2984197 A1 | 21-06-2013 |
| | | | HU | E026248 T2 | 30-05-2016 |
| | | | JP | 6300729 B2 | 28-03-2018 |
| | | | JP | 2015507759 A | 12-03-2015 |
| | | | KR | 20140111252 A | 18-09-2014 |
| | | | MX | 353039 B | 18-12-2017 |
| | | | PL | 2790876 T3 | 29-01-2016 |
| | | | PT | 2790876 E | 23-11-2015 |
| | | | US | 2014307223 A1 | 16-10-2014 |
| | | | WO | 2013087696 A1 | 20-06-2013 |
| WO 2016193771 | A1 | 08-12-2016 | CN | 107567382 A | 09-01-2018 |
| | | | EP | 3292447 A1 | 14-03-2018 |
| | | | US | 2018290257 A1 | 11-10-2018 |
| | | | WO | 2016193771 A1 | 08-12-2016 |
| US 2009125137 | A1 | 14-05-2009 | AU | 2006277686 A1 | 15-02-2007 |
| | | | BR | PI0614811 A2 | 04-08-2009 |
| | | | CA | 2618336 A1 | 15-02-2007 |
| | | | CN | 101243351 A | 13-08-2008 |
| | | | EP | 1752815 A1 | 14-02-2007 |
| | | | EP | 1920291 A2 | 14-05-2008 |
| | | | IL | 189122 A | 30-01-2014 |
| | | | JP | 2009505128 A | 05-02-2009 |
| | | | KR | 20080042811 A | 15-05-2008 |
| | | | US | 2009125137 A1 | 14-05-2009 |
| | | | US | 2013218533 A1 | 22-08-2013 |
| | | | WO | 2007017766 A2 | 15-02-2007 |
| WO 2016202480 | A1 | 22-12-2016 | BR | 112017022640 A2 | 10-07-2018 |
| | | | CN | 107567595 A | 09-01-2018 |
| | | | EP | 3304180 A1 | 11-04-2018 |
| | | | US | 2018143452 A1 | 24-05-2018 |
| | | | WO | 2016202480 A1 | 22-12-2016 |

EPO FORM P0459

For more details about this annex : see Official Journal of the European Patent Office, No. 12/82

**REFERENCES CITED IN THE DESCRIPTION**

**Patent documents cited in the description**

- WO 2016202480 A1
- WO 2016193771 A1